# EUROPEAN PATENT APPLICATION

(11) **EP 4 848 536 A1**
(43) Date of publication of application: **02.12.2026**
(21) Application number: 24926459.9
(22) Date of filing: 01.03.2024
(51) Int. Cl.: H02J 50/12, H02J 7/04

(54) **WIRELESS POWER RECEIVING CIRCUIT, ELECTRONIC DEVICE AND WIRELESS CHARGING SYSTEM**

(71) Applicant: Honor Device Co., Ltd., Shenzhen, Guangdong 518040 (CN)
(72) Inventor: WU, Yuan, Shenzhen, Guangdong 518040 (CN); SONG, Jiaxiang, Shenzhen, Guangdong 518040 (CN); WANG, Chao, Shenzhen, Guangdong 518040 (CN)
(74) Representative: Gill Jennings & Every LLP
(86) International application number: PCT/CN2024/079674
(87) International publication number: WO 2025/179583

(57) **Abstract**

This application discloses a wireless power receiving circuit, an electronic device, and a wireless charging system, and relates to the field of circuit technologies. The wireless power receiving circuit includes a receiving coil, an impedance compensation module, a rectifying module, an impedance adjustment module, and a processing module. The receiving coil, the impedance compensation module, and the rectifying module are connected in series to supply power to a load. The impedance adjustment module and the impedance compensation module are connected in parallel. The processing module controls turn-on and turn-off of the impedance adjustment module to control a waveform of an electrical signal in the receiving coil, thereby transmitting communication information to a wireless power transmitting circuit. In this way, a communication capacitor connected in parallel to the rectifying module can be removed, so that a problem that large capacitor howling is generated when the communication capacitor connected in parallel to the rectifying module has a large plate vibration may be avoided.

## Description

### TECHNICAL FIELD

This application relates to the field of circuit technologies, and in particular, to a wireless power receiving circuit, an electronic device, and a wireless charging system.

### BACKGROUND

Electronic devices include mobile phones, tablet computers, and the like. Generally, an electronic device has a wireless power receiving circuit, and the wireless power receiving circuit is configured to implement a wireless charging function. The wireless power receiving circuit may include a receiving coil, an impedance compensation module, and a rectifying module. The impedance compensation module is connected between the receiving coil and the rectifying module. During operation of the receiving coil, an alternating current may be outputted to the rectifying module. The rectifying module rectifies the alternating current, and then outputs a direct current to a load of the electronic device, thereby supplying power to the load.

In the related technology, the wireless power receiving circuit further includes a communication capacitor connected in parallel to the rectifying module. During operation of the wireless power receiving circuit, turn-on or turn-off of a branch in which the communication capacitor is located is controlled to control a waveform of an electrical signal in the receiving coil, thereby transmitting communication information to a wireless power transmitting circuit.

However, as a wireless charging power increases, a voltage outputted by the receiving coil increases, causing a voltage across two ends of the communication capacitor to increase as well. In this case, due to the piezoelectric effect, the communication capacitor generates a significant plate vibration, resulting in large capacitor howling, and affecting user experience.

### SUMMARY

Embodiments of this application provide a wireless power receiving circuit, an electronic device, and a wireless charging system, which can effectively alleviate a problem that large capacitor howling is generated when an electronic device is wirelessly charged, thereby improving user experience. The technical solutions are as follows:

According to a first aspect, a wireless power receiving circuit is provided. The wireless power receiving circuit is used in an electronic device, and is configured to implement a wireless charging function of the electronic device. The wireless power receiving circuit includes a receiving coil, an impedance compensation module, a rectifying module, an impedance adjustment module, and a processing module.

A first end of the receiving coil is connected to a first end of the impedance compensation module. A second end of the impedance compensation module is connected to a first input end of the rectifying module. A second end of the receiving coil is connected to a second input end of the rectifying module. An output end of the rectifying module is configured to be connected to a load of the electronic device. In this way, during operation of the wireless power receiving circuit, the receiving coil may output an alternating current to the rectifying module through the impedance compensation module. After rectifying the alternating current, the rectifying module may output a direct current to the load, thereby supplying power to the load.

A first end of the impedance adjustment module is connected to the first end of the impedance compensation module, and a second end of the impedance adjustment module is connected to the second end of the impedance compensation module. In other words, the impedance adjustment module and the impedance compensation module are connected in parallel. A control end of the impedance adjustment module is connected to the processing module, so that the processing module may control turn-on and turn-off of the impedance adjustment module. In this case, the processing module may control turn-on and turn-off of the impedance adjustment module, to cause a waveform of an electrical signal in the receiving coil to change. A change in the waveform of the electrical signal in the receiving coil is used to transmit communication information.

In this embodiment of this application, the wireless power receiving circuit includes the receiving coil, the impedance compensation module, the rectifying module, the impedance adjustment module, and the processing module. The receiving coil, the impedance compensation module, and the rectifying module are connected in series and are configured to supply power to the load, to implement the wireless charging function. The impedance adjustment module and the impedance compensation module are connected in parallel. The processing module controls turn-on and turn-off of the impedance adjustment module to control the waveform of the electrical signal in the receiving coil, thereby transmitting the communication information to the wireless power transmitting circuit. In this way, a communication capacitor connected in parallel to the rectifying module can be removed, so that a problem that large capacitor howling is generated when the communication capacitor connected in parallel to the rectifying module has a large plate vibration may be avoided. In an embodiment of this application, the impedance adjustment module may include a communication capacitor. In other words, the communication capacitor is set to be connected in parallel to the impedance compensation module. Since in a series loop formed by the receiving coil, the impedance compensation module, and the rectifying module, a voltage of the impedance compensation module is much less than a voltage of the rectifying module, the communication capacitor is set to be connected in parallel to the impedance compensation module. Compared with the related technology, this can greatly reduce a voltage across two ends of the communication capacitor, thereby attenuating the plate vibration of the communication capacitor, alleviating the problem that large capacitor howling is generated when the electronic device is wirelessly charged, and improving user experience.

In some embodiments, the impedance adjustment module includes a first impedance unit and a switching unit that are connected in series. Specifically, a first end of the first impedance unit is connected to the first end of the impedance compensation module. A second end of the first impedance unit is connected to a first end of the switching unit. A second end of the switching unit is connected to the second end of the impedance compensation module. The processing module is connected to a control end of the switching unit. In this case, the processing module is configured to control turn-on and turn-off of the switching unit, to control turn-on and turn-off of the impedance adjustment module.

Further, the impedance adjustment module may further include a second impedance unit. A first end of the second impedance unit is connected to the second end of the switching unit, and a second end of the second impedance unit is connected to the second end of the impedance compensation module. In other words, in this case, the first impedance unit, the switching unit, and the second impedance unit are connected in series, to form the impedance adjustment module.

The first impedance unit includes a first capacitor, and the second impedance unit includes a second capacitor, and/or the first impedance unit includes a first resistor, and the second impedance unit includes a second resistor. In this case, the first capacitor and the second capacitor are both communication capacitors.

In some embodiments, the switching unit includes a first transistor and a second transistor. A first electrode of the first transistor is connected to the second end of the first impedance unit. A second electrode of the first transistor is connected to a second electrode of the second transistor. A first electrode of the second transistor is connected to the second end of the impedance compensation module. In other words, the first transistor and the second transistor are connected in series to form the switching unit. The processing module is connected to a control electrode of the first transistor, a control electrode of second transistor, the second electrode of the first transistor, and the second electrode of the second transistor, to control turn-on and turn-off of the first transistor and the second transistor.

In some specific embodiments, the first transistor and the second transistor are both N-type transistors. In this case, the first electrode of the first transistor and the first electrode of the second transistor are both drains of the N-type transistors. The second electrode of the first transistor and the second electrode of the second transistor are sources of the N-type transistors.

In some embodiments, the processing module includes a control unit and a modulation unit. An output end of the control unit is connected to an input end of the modulation unit. An output end of the modulation unit is connected to the control end of the impedance adjustment module. The control unit is configured to generate a control signal based on the communication information, and transmit the control signal to the modulation unit. The modulation unit is configured to modulate the control signal to generate a modulation signal. The modulation signal is used to control turn-on and turn-off of the impedance adjustment module.

In some embodiments, the impedance compensation module includes a third capacitor. A first electrode plate of the third capacitor is connected to the first end of the receiving coil and the first end of the impedance adjustment module. A second electrode plate of the third capacitor is connected to the first input end of the rectifying module and the second end of the impedance adjustment module.

Further, the impedance compensation module may further include a fourth capacitor and an inductor. The second electrode plate of the third capacitor is connected to a first electrode plate of the fourth capacitor and a first end of the inductor. A second end of the inductor is connected to the first input end of the rectifying module and the second end of the impedance adjustment module. A second electrode plate of the fourth capacitor is connected to the second end of the receiving coil.

In some embodiments, the rectifying module is a full-wave rectifying circuit or a half-wave rectifying circuit.

According to a second aspect, an electronic device is provided. The electronic device includes a load and the wireless power receiving circuit according to any one of the first aspect. An output end of the wireless power receiving circuit is connected to the load, and is configured to output an electrical signal to the load.

In some embodiments, the load may be at least one of an energy storage module, a system on chip, a display, a speaker, a microphone, a camera, a motor, and a sensor in the electronic device.

According to a third aspect, a wireless charging system is provided, including a wireless charging device and the electronic device according to any one of the second aspect. The wireless charging device is configured to wirelessly charge the electronic device. The wireless charging device includes a wireless power transmitting circuit.

It can be understood that the beneficial effects of the foregoing second aspect and third aspect may refer to the relevant descriptions in the foregoing first aspect. Details are not described herein again.

### BRIEF DESCRIPTION OF DRAWINGS

FIG. 1 is a diagram of an appearance of an electronic device;
FIG. 2 is a diagram of an appearance of a wireless charging device;
FIG. 3 is a diagram of a scenario in which a first type of a wireless charging device wirelessly charges an electronic device;
FIG. 4 is a diagram of a scenario in which a second type of a wireless charging device wirelessly charges an electronic device;
FIG. 5 is a diagram of a circuit of power transmission of a wireless charging system;
FIG. 6 is a diagram of a circuit of power transmission and communication of a wireless charging system in the related technology;
FIG. 7 is a diagram of a circuit of power transmission and ASK modulation of a wireless charging system in the related technology;
FIG. 8 is a diagram of a circuit of a wireless power receiving circuit of an electronic device in the related technology;
FIG. 9 is a diagram of an equivalent circuit of a wireless charging system when a switching unit is turned off in the related technology;
FIG. 10 is a diagram of an equivalent circuit of a wireless charging system when a switching unit is turned on in the related technology;
FIG. 11 is a diagram of a circuit structure of a first type of a wireless power receiving circuit according to an embodiment of this application;
FIG. 12 is a diagram of a circuit structure of a second type of a wireless power receiving circuit according to an embodiment of this application;
FIG. 13 is a diagram of a circuit of a first type of a wireless power receiving circuit according to an embodiment of this application;
FIG. 14 is a diagram of a circuit structure of a third type of a wireless power receiving circuit according to an embodiment of this application;
FIG. 15 is a diagram of a circuit of a second type of a wireless power receiving circuit according to an embodiment of this application;
FIG. 16 is a diagram of a circuit of a third type of a wireless power receiving circuit according to an embodiment of this application;
FIG. 17 is a diagram of a circuit of a fourth type of a wireless power receiving circuit according to an embodiment of this application;
FIG. 18 is a diagram of a circuit of a fifth type of a wireless power receiving circuit according to an embodiment of this application;
FIG. 19 is a diagram of a circuit of a sixth type of a wireless power receiving circuit according to an embodiment of this application;
FIG. 20 is a diagram of a circuit of a first type of a rectifying module according to an embodiment of this application;
FIG. 21 is a diagram of a circuit of a second type of a rectifying module according to an embodiment of this application;
FIG. 22 is a diagram of a circuit of power transmission and ASK modulation of a wireless charging system according to an embodiment of this application;
FIG. 23 is a diagram of a circuit of a first type of an inverter module according to an embodiment of this application;
FIG. 24 is a diagram of a circuit of a second type of an inverter module according to an embodiment of this application;
FIG. 25 is a diagram of a circuit of power transmission and ASK communication of a wireless charging system according to an embodiment of this application;
FIG. 26 is a diagram of an equivalent circuit of a wireless charging system when a switching unit is turned off according to an embodiment of this application;
FIG. 27 is a diagram of an equivalent circuit of a wireless charging system when a switching unit is turned on according to an embodiment of this application;
FIG. 28 is a curve diagram of a voltage variation across two ends of a third capacitor according to an embodiment of this application;
FIG. 29 is a diagram of waveforms of electrical signals at various positions in a simulation circuit of a wireless charging system in the related technology;
FIG. 30 is a diagram of waveforms of electrical signals at various positions in a simulation circuit of a wireless charging system according to an embodiment of this application;
FIG. 31 is a diagram of a waveform of a demodulated signal obtained by an ASK demodulation module in the related technology; and
FIG. 32 is a diagram of a waveform of a demodulated signal obtained by an ASK demodulation module according to an embodiment of this application.

In the related technology, meanings represented by the reference numerals in the drawings are respectively as follows: 10: electronic device; 10A: wireless power receiving circuit; 110: second impedance compensation module; 120: rectifying module; 130: load; 140: ASK modulation module; 142: switching unit; 144: processing module; and 150: FSK demodulation module.

In embodiments of this application, meanings represented by the reference numerals in the drawings are respectively as follows: 30: wireless power receiving circuit; 310: second impedance compensation module; 320: rectifying module; 330: impedance adjustment module; 332: first impedance unit; 334: switching unit; 336: second impedance unit; 340: processing module; 342: control unit; 344: modulation unit; 40: electronic device; and 410: load.

Meanings represented by the reference numerals in the drawings that are used in both the related technology and embodiments of this application are respectively as follows: 20: wireless charging device; 210: power adapter; 220: charging base; 220A: wireless power transmitting circuit; 222: inverter module; 224: first impedance compensation module; 226: ASK demodulation module; 2262: filtering module; 2264: signal processing module; and 228: FSK modulation module.

### DESCRIPTION OF EMBODIMENTS

To make objectives, technical solutions, and advantages of this application clearer, implementations of this application are further described below in detail with reference to accompanying drawings.

It should be understood that the "plurality of" referred to in this application means two or more. In descriptions of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, to clearly describe the technical solutions in this application, terms such as "first" and "second" are used to distinguish between same items or similar items that provide basically same functions or purposes. A person skilled in the art may understand that the terms such as "first" and "second" do not define a quantity and an execution sequence, and the terms such as "first" and "second" do not indicate a definite difference.

Before describing in detail the wireless power receiving circuit provided in embodiments of this application, application scenarios of the wireless power receiving circuit and the related technology are first described.

A wireless power transmission (wireless power transmission, WPT) technology, also referred to as a wireless power transfer technology, refers to that a power transmitting device converts power into another form of relay energy and transmits the relay energy across space for a distance, and then a power receiving device converts the relay energy back into the power, thereby implementing wireless power transmission. Based on different forms of relay energy during energy transmission, wireless power transmission may be classified into a magnetic field coupling type, an electric field coupling type, an electromagnetic field coupling type, and the like.

With the development of the wireless power transmission technology, more and more electronic devices can perform wireless power transmission. For example, a wireless charging device can wirelessly charge an electronic device. In this process, the wireless charging device serves as the power transmitting device, for example, a wireless charger, or a mouse pad, a desk, a tea table, or a sofa integrated with a wireless charging function, and the electronic device serves as the power receiving device, for example, a mobile phone, a tablet computer, an earphone, a bracelet, a watch, a stylus, or an automobile. For another example, a first electronic device may wirelessly charge a second electronic device. In this process, the first electronic device serves as the power transmitting device, for example, a mobile phone or a tablet computer, and the second electronic device serves as the power receiving device, for example, a mobile phone, a tablet computer, an earphone, a bracelet, a watch, or a stylus. The wireless charging technology is a wireless power transmission technology of a magnetic field coupling type.

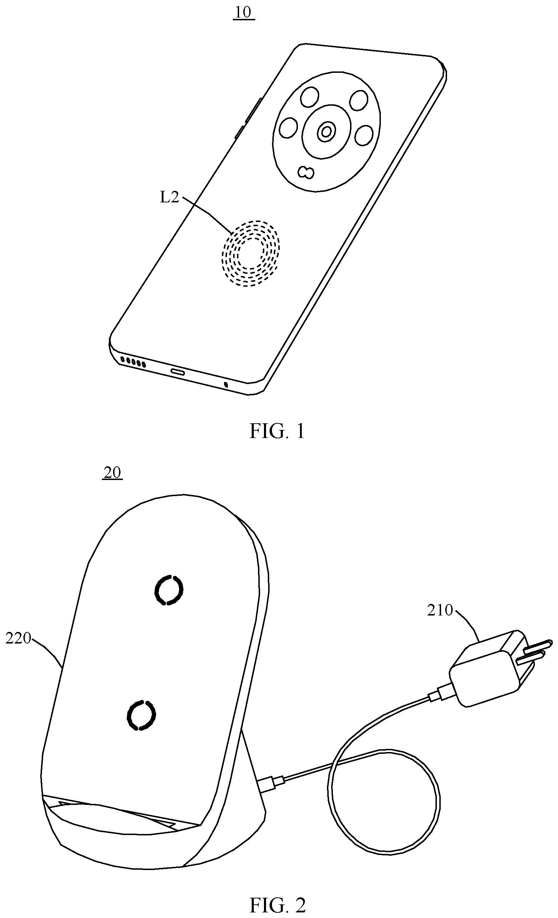

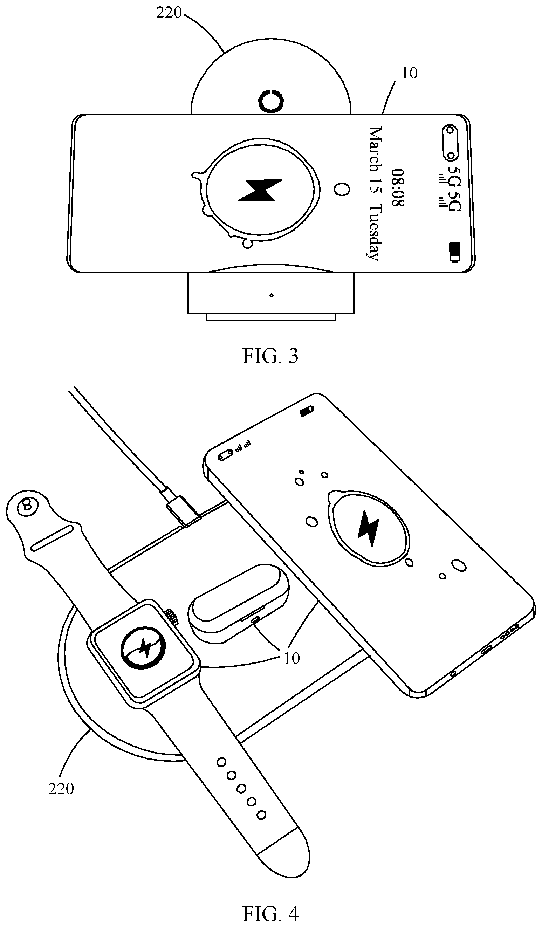

An example in which a wireless charging device 20 wirelessly charges an electronic device 10 and the electronic device 10 is a mobile phone is used. FIG. 1 is a diagram of an appearance of the electronic device 10, and FIG. 2 is a diagram of an appearance of the wireless charging device 20. As shown in FIG. 2, the wireless charging device 20 includes a power adapter 210 and a charging base 220 connected to the power adapter 210. When the power adapter 210 is connected to mains power, the power adapter 210 is equivalent to a direct current power supply, and is configured to output a direct current to the charging base 220. The charging base 220 is configured to convert the direct current outputted by the power adapter 210 into a changing magnetic field. FIG. 3 is a diagram of a scenario in which the charging base 220 of the wireless charging device 20 wirelessly charges the electronic device 10. As shown in FIG. 1 to FIG. 3, when the electronic device 10 is placed on the charging base 220 of the wireless charging device 20, the electronic device 10 can convert the changing magnetic field generated by the charging base 220 into power, thereby wirelessly charging the electronic device 10.

It can be understood that, in an embodiment shown in FIG. 3, only a scenario in which one wireless charging device 20 wirelessly charges one electronic device 10 is showed. In some other embodiments, as shown in FIG. 4, one wireless charging device 20 may also simultaneously wirelessly charge a plurality of electronic devices 10.

The following describes the principle of power transmission in the wireless charging technology by using a scenario in FIG. 3 as an example.

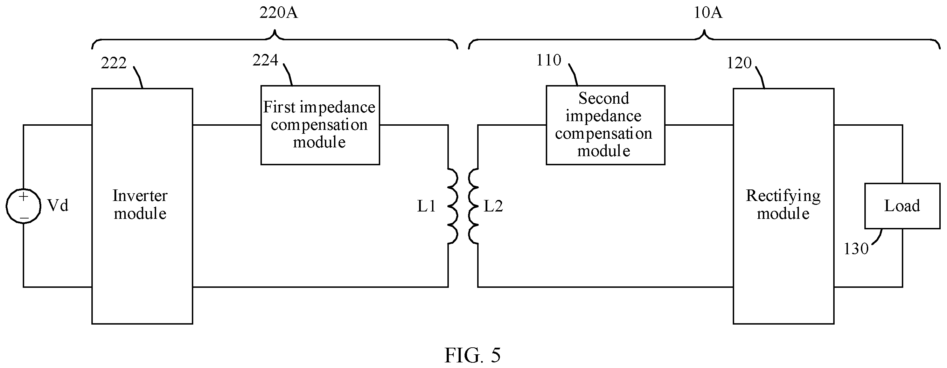

FIG. 5 is a diagram of a circuit of a wireless charging system. In an embodiment shown in FIG. 5, a direct current power supply Vd is used to represent the power adapter 210. In other words, the direct current power supply Vd is configured to output a direct current to the charging base 220. A wireless power transmitting circuit 220A is provided in the charging base 220. As shown in FIG. 5, the wireless power transmitting circuit 220A includes an inverter module 222, a first impedance compensation module 224, and a transmitting coil L1. A first input end of the inverter module 222 is connected to a positive electrode of the direct current power supply Vd, and a second input end of the inverter module 222 is connected to a negative electrode of the direct current power supply Vd. A first output end of the inverter module 222 is connected to a first end of the first impedance compensation module 224, and a second end of the first impedance compensation module 224 is connected to a first end of the transmitting coil L1. A second output end of the inverter module 222 is connected to a second end of the transmitting coil L1. In this way, during operation of the wireless power transmitting circuit 220A in the charging base 220, the inverter module 222 may convert the direct current outputted by the direct current power supply Vd into an alternating current of a preset frequency and output the alternating current to the transmitting coil L1. The first impedance compensation module 224 is configured to compensate leakage inductance on a transmitting side, to implement impedance matching of the circuit, thereby improving a transmission power of wireless charging. The transmitting coil L1 is configured to convert the alternating current into a changing magnetic field and transmit the changing magnetic field into space.

A wireless power receiving circuit 10A and a load 130 are provided in the electronic device 10. As shown in FIG. 5, the wireless power receiving circuit 10A includes a receiving coil L2, a second impedance compensation module 110, and a rectifying module 120. The receiving coil L2 is configured to perform electromagnetic induction with the transmitting coil L1. A first end of the receiving coil L2 is connected to a first end of the second impedance compensation module 110. A second end of the second impedance compensation module 110 is connected to a first input end of the rectifying module 120. A second end of the receiving coil L2 is connected to a second input end of the rectifying module 120. An output end of the rectifying module 120 is configured to be connected to the load 130 of the electronic device 10. In this way, during operation of the wireless power receiving circuit 10A, the receiving coil L2 may convert the changing magnetic field into an alternating current and output the alternating current to the rectifying module 120. The rectifying module 120 may convert the inputted alternating current into a direct current and output the direct current to the load 130, thereby supplying power to the load 130. The second impedance compensation module 110 is configured to compensate leakage inductance on a receiving side, to implement impedance matching of the circuit, thereby improving a receiving power of wireless charging.

When the wireless charging device 20 wirelessly charges the electronic device 10, in addition to power transmission, communication is further required between the wireless charging device 20 and the electronic device 10. In other words, communication information further needs to be exchanged between the wireless charging device 20 and the electronic device 10, to ensure reliability and safety of wireless charging. The communication information is generally in a form of digital information. Content of the communication information may include a coupling degree between the transmitting coil L1 and the receiving coil L2, an identity document (identity document, ID) and a type of the electronic device 10, an ID and a type of the wireless charging device 20, a required power level and boost information of the electronic device 10, and the like.

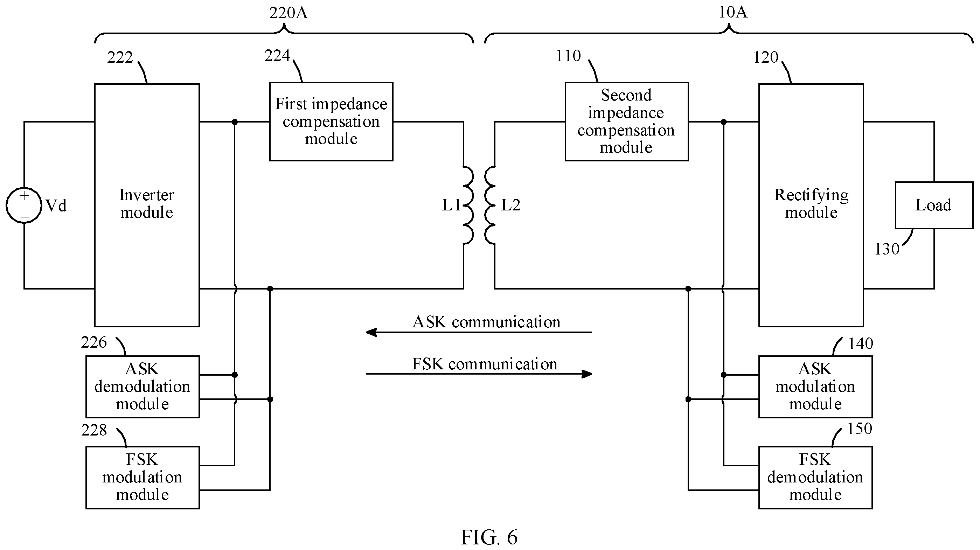

FIG. 6 is a diagram of a circuit of power transmission and communication of a wireless charging system in the related technology. As shown in FIG. 6, in the related technology, a communication manner between the wireless charging device 20 and the electronic device 10 includes: a communication manner from the wireless charging device 20 to the electronic device 10 being a frequency shift keying (frequency shift keying, FSK) communication manner; and a communication manner from the electronic device 10 to the wireless charging device 20 being an amplitude shift keying (amplitude shift keying, ASK) communication manner. The following describes the FSK communication manner and the ASK communication manner respectively.

The FSK communication manner refers to that a frequency change of a carrier is used to transmit digital information. Based on this, an FSK modulation module 228 is further provided in the wireless power transmitting circuit 220A. The FSK modulation module 228 is connected to the transmitting coil L1, and is configured to modulate a frequency of an electrical signal in the transmitting coil L1, to represent 1 and 0 in binary. Since electromagnetic induction exists between the receiving coil L2 and the transmitting coil L1, a frequency change of the electrical signal in the transmitting coil L1 causes a frequency change of an electrical signal in the receiving coil L2. An FSK demodulation module 150 is further provided in the wireless power receiving circuit 10A. The FSK demodulation module 150 is connected to the receiving coil L2, and the digital information transmitted by the wireless charging device 20 can be obtained by demodulating a frequency of the electrical signal in the receiving coil L2.

The ASK communication refers to that an amplitude change of a carrier is used to transmit digital information. Based on this, an ASK modulation module 140 is further provided in the wireless power receiving circuit 10A. The ASK modulation module 140 is connected to the receiving coil L2, and is configured to modulate a load magnitude in the wireless power receiving circuit 10A, thereby modulating an amplitude of the electrical signal in the receiving coil L2, to represent 1 and 0 in binary. Since electromagnetic induction exists between the receiving coil L2 and the transmitting coil L1, an amplitude change of the electrical signal in the receiving coil L2 causes an amplitude change of the electrical signal in the transmitting coil L1. An ASK demodulation module 226 is further provided in the wireless power transmitting circuit 220A. The ASK demodulation module 226 is connected to the transmitting coil L1, and the digital information transmitted by the electronic device 10 can be obtained by demodulating an amplitude of the electrical signal in the transmitting coil L1.

The following describes the operating principle of the ASK modulation module 140.

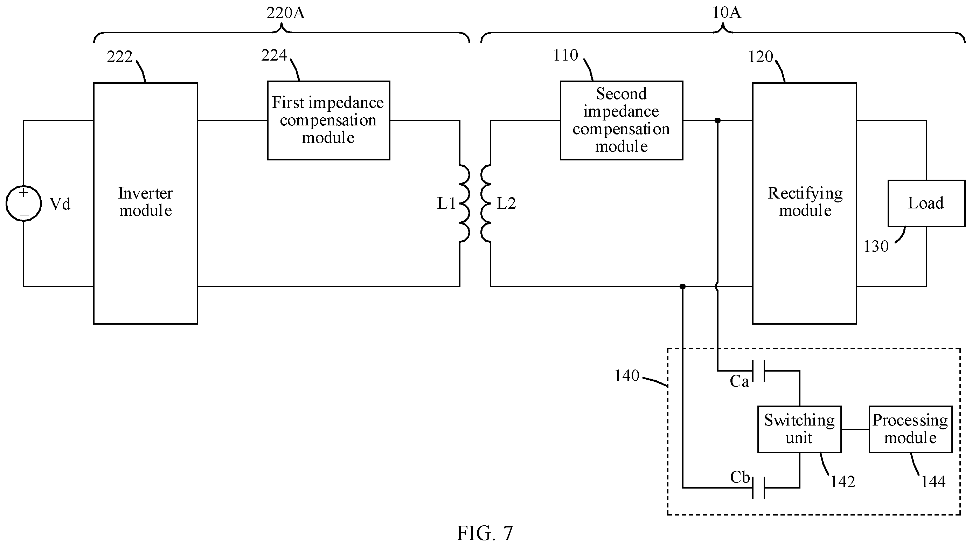

FIG. 7 is a diagram of a circuit of power transmission and ASK modulation of a wireless charging system in the related technology, in which a circuit structure of the ASK modulation module 140 is shown, and the FSK demodulation module 150, the ASK demodulation module 226, and the FSK modulation module 228 are not shown. As shown in FIG. 7, in the related technology, the ASK modulation module 140 includes a first communication capacitor Ca, a second communication capacitor Cb, a switching unit 142, and a processing module 144. Specifically, a first electrode plate of the first communication capacitor Ca is connected to the first input end of the rectifying module 120, and a second electrode plate of the first communication capacitor Ca is connected to a first end of the switching unit 142. A second end of the switching unit 142 is connected to a second electrode plate of the second communication capacitor Cb, and a first electrode plate of the second communication capacitor Cb is connected to the second input end of the rectifying module 120. The processing module 144 is connected to a control end of the switching unit 142, to control turn-on and turn-off between the first end and the second end of the switching unit 142. In this way, when the processing module 144 controls turn-on between the first end and the second end of the switching unit 142, a branch in which the first communication capacitor Ca and the second communication capacitor Cb are located is turned on. In this case, a circuit formed by the first communication capacitor Ca and the second communication capacitor Cb connected in series through the switching unit 142 is connected in parallel to the rectifying module 120, and the first communication capacitor Ca and the second communication capacitor Cb are connected to the wireless power receiving circuit 10A. When the processing module 144 controls turn-off between the first end and the second end of the switching unit 142, the branch in which the first communication capacitor Ca and the second communication capacitor Cb are located is not turned on. In this case, the first communication capacitor Ca and the second communication capacitor Cb are not connected to the wireless power receiving circuit 10A. In this process, when the first communication capacitor Ca and the second communication capacitor Cb are switched between being connected to and not being connected to the wireless power receiving circuit 10A, this is equivalent to a change in the load magnitude in the wireless power receiving circuit 10A. In this way, the amplitude of the electrical signal in the receiving coil L2 changes, thereby transmitting the digital information to the wireless power transmitting circuit 220A.

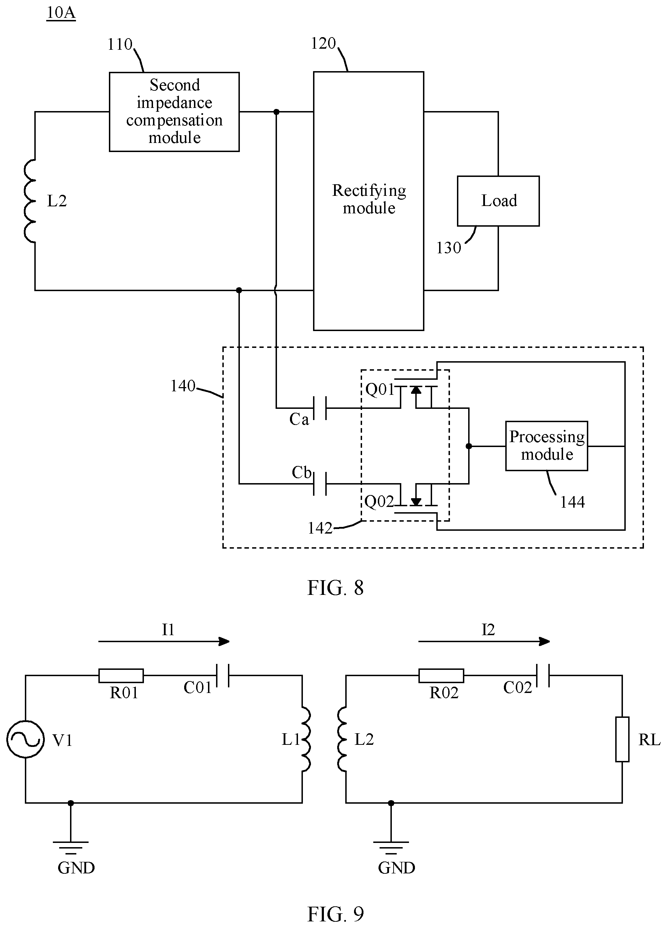

Generally, as shown in FIG. 8, in the ASK modulation module 140, the switching unit 142 may include a transistor Q01 and a transistor Q02. Specifically, a first electrode of the transistor Q01 is connected to the second electrode plate of the first communication capacitor Ca, a second electrode of the transistor Q01 is connected to a second electrode of the transistor Q02, and a first electrode of the transistor Q02 is connected to the second electrode plate of the second communication capacitor Cb. The processing module 144 is connected to a control electrode of the transistor Q01, a control electrode of the transistor Q02, the second electrode of the transistor Q01, and the second electrode of the transistor Q02, and is configured to control turn-on and turn-off of the transistor Q01 and the transistor Q02. When the transistor Q01 and the transistor Q02 are turned on, the first end and the second end of the switching unit 142 are turned on; and when the transistor Q01 and the transistor Q02 are turned off, the first end and the second end of the switching unit 142 are turned off.

The following analyzes an equivalent circuit of the circuit diagram shown in FIG. 7.

FIG. 9 is a diagram of an equivalent circuit of a wireless charging system when the switching unit 142 is turned off in the related technology. Specifically, FIG. 9 is a diagram of an equivalent circuit of the circuit diagram shown in FIG. 7 in a case that the switching unit 142 is turned off. The direct current power supply Vd and the inverter module 222 are combined and simplified as an alternating current power supply V1. In other words, the alternating current power supply V1 is configured to output an alternating current of a preset frequency to the transmitting coil L1. A resistor R01 is an equivalent resistor in the wireless power transmitting circuit 220A. A capacitor C01 is the first impedance compensation module 224. A resistor R02 is an equivalent resistor in the wireless power receiving circuit 10A. A capacitor C02 is the second impedance compensation module 110. A load resistor RL is an equivalent resistor of the load 130 connected to the wireless power receiving circuit 10A. The second end of the transmitting coil L1 and the second end of the receiving coil L2 are both connected to the ground GND.

As can be seen from FIG. 9, when the switching unit 142 is turned off, the wireless power transmitting circuit 220A may be equivalent to a circuit formed by the alternating current power supply V1, the resistor R01, the capacitor C01, and the transmitting coil L1 connected in series. A current in this circuit is a first current I1. The wireless power receiving circuit 10A and the load 130 in the electronic device 10 may be equivalent to a circuit formed by the receiving coil L2, the resistor R02, the capacitor C02, and the load resistor RL connected in series. A current in this circuit is a second current I2.

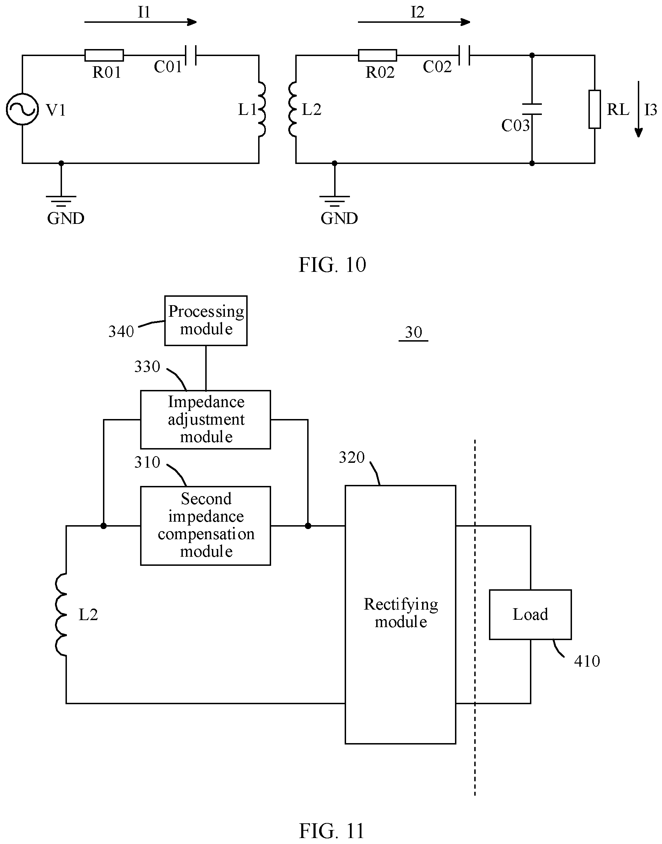

FIG. 10 is a diagram of an equivalent circuit of a wireless charging system when the switching unit 142 is turned on in the related technology. Specifically, FIG. 10 is a diagram of an equivalent circuit of the circuit diagram shown in FIG. 7 in a case that the switching unit 142 is turned on. A capacitor C03 is a single-ended capacitor in the communication capacitors (including the first communication capacitor Ca and the second communication capacitor Cb). In other words, the capacitor C03 is any one of the first communication capacitor Ca and the second communication capacitor Cb. Generally, a capacitance value of the first communication capacitor Ca is equal to a capacitance value of the second communication capacitor Cb.

As can be seen from FIG. 10, when the switching unit 142 is turned on, the wireless power transmitting circuit 220A is still equivalent to a circuit formed by the alternating current power supply V1, the resistor R01, the capacitor C01, and the transmitting coil L1 connected in series. A current in this circuit is a first current I1. The wireless power receiving circuit 10A is equivalent to a circuit formed by the receiving coil L2, the resistor R02, the capacitor C02, and the capacitor C03 connected in series. The load resistor RL and the capacitor C03 are connected in parallel. In this circuit, a current in a main circuit is the second current I2, and a current in the load resistor RL is a third current I3. Therefore, a current in the capacitor C03 is equal to a difference between the second current I2 and the third current I3.

The following equations can be obtained by analyzing the equivalent circuit shown in FIG. 10. $\left\{\begin{matrix}\left({R}_{1}+\frac{1}{{jwC}_{1}}+{jwL}_{1}\right) {\dot{I}}_{1} - jwM {\dot{I}}_{2} = {\dot{U}}_{1} \\ \left({R}_{2}+\frac{1}{{jwC}_{2}}+{jwL}_{2}+\frac{1}{{jwC}_{3}}\right) {\dot{I}}_{2} - jwM {\dot{I}}_{1} - \frac{1}{{jwC}_{3}} {\dot{I}}_{3} = 0 \\ \frac{1}{{jwC}_{3}} {\dot{I}}_{3} - \frac{1}{{jwC}_{3}} {\dot{I}}_{2} + {R}_{L} {\dot{I}}_{3} = 0\end{matrix}\right.$

*R*₁ is an resistance of the resistor R01, *C*₁ is a capacitance value of the capacitor C01, *j* is a rotation factor of 90 degrees, *w* is an angular frequency of the current in the transmitting coil L1 and the receiving coil L2, $\frac{1}{{jwC}_{1}}$ is a capacitive reactance of the capacitor C01, *L*₁ is an inductance value of the transmitting coil L1, *jwL*₁ is an inductive reactance of the transmitting coil L1, *I*₁ is a value of the first current I1, *M* is a mutual induction factor between the transmitting coil L1 and the receiving coil L2, *I*₂ is a value of the second current I2, *U*₁ is a voltage value of the alternating current power supply V1, *R*₂ is an resistance of the resistor R02, *C*₂ is a capacitance value of the capacitor C02, $\frac{1}{{jwC}_{2}}$ is a capacitive reactance of the capacitor C02, *L*₂ is an inductance value of the receiving coil L2, *jwL*₂ is an inductive reactance of the receiving coil L2, *C*₃ is a capacitance value of the capacitor C03, $\frac{1}{{jwC}_{3}}$ is a capacitive reactance of the capacitor C03, *I*₃ is a value of the third current I3, and *R_{L}* is an resistance of the load resistor RL. Since the first current I1, the second current I2, and the third current I3 are all alternating currents, the first current I1, the second current I2, and the third current I3 are all vectors; and since a voltage outputted by the alternating current power supply V1 is an alternating voltage, the voltage of the alternating current power supply V1 is also a vector.

The foregoing formula is expressed in a vector form, that is: $\left[\begin{matrix}{R}_{1} + \frac{1}{{jwC}_{1}} + {jwL}_{1} & - jwM & 0 \\ - jwM & {R}_{2} + \frac{1}{{jwC}_{2}} + {jwL}_{2} + \frac{1}{{jwC}_{3}} & - \frac{1}{{jwC}_{3}} \\ 0 & - \frac{1}{{jwC}_{3}} & \frac{1}{{jwC}_{3}} + {R}_{L}\end{matrix}\right] \times \left[\begin{matrix}{\dot{I}}_{1} \\ {\dot{I}}_{2} \\ {\dot{I}}_{3}\end{matrix}\right] = \left[\begin{matrix}{\dot{U}}_{1} \\ 0 \\ 0\end{matrix}\right]$

It can be seen that, in the wireless charging system, when various system parameters are determined, the value of the first current I1, the value of the second current I2, and the value of the third current I3 can be obtained.

In the related technology, when communication is performed between the wireless charging device 20 and the electronic device 10, a plate vibration of the communication capacitor is generated. The reason is that a voltage on the communication capacitor is an alternating sinusoidal voltage, and a peak of this voltage is proportional to an output voltage of the rectifying module 120. Therefore, when a wireless charging power is high, the voltage outputted by the receiving coil L2 is large, the voltage outputted by the rectifying module 120 is also large, and a peak-to-peak value of the voltage on the communication capacitor is also large. In this case, due to the piezoelectric effect, the communication capacitor generates a significant plate vibration, resulting in large capacitor howling, and affecting user experience.

In the related technology, to reduce the plate vibration of the communication capacitor, a general technical solution is to reduce a capacitance value of the communication capacitor. However, as described above, the operating principle of the communication capacitor is that "when the first communication capacitor Ca and the second communication capacitor Cb are switched between being connected to and not being connected to the wireless power receiving circuit 10A, this is equivalent to a change in a load magnitude in the wireless power receiving circuit 10A". Therefore, if the capacitance value of the communication capacitor is reduced, a change in an equivalent load when the first communication capacitor Ca and the second communication capacitor Cb are switched between being connected to and not being connected to the wireless power receiving circuit 10A is reduced, thereby reducing the amplitude change of the electrical signal in the receiving coil L2. This is not beneficial to transmission of communication information and leads to degradation of communication quality.

In view of this, an embodiment of this application provides a wireless power receiving circuit, an electronic device, and a wireless charging system. The wireless power receiving circuit can effectively alleviate, without reducing the capacitance value of the communication capacitor, a problem that large capacitor howling is generated when an electronic device is wirelessly charged, thereby improving user experience.

The following describes the wireless power receiving circuit provided in this embodiment of this application in detail. In this embodiment of this application, a connection between two electronic components/electrical modules refers to an electrical connection. The electrical connection refers to a connection through which electrical signal transmission can be performed. The electrical connection includes a direct connection and an indirect connection. For example, a direct connection between a component A and a component B refers to that the component A and the component B are connected by a conducting wire for electrical signal transmission. An indirect connection between the component A and the component B refers to that a first end of a component C is connected to the component A by a conducting wire, and a second end of the component C is connected to the component B by a conducting wire, so that electrical signal transmission can be performed between the component A and the component B through the component C. An electrical signal includes a current and a voltage.

The wireless power receiving circuit is used in an electronic device, can perform electromagnetic induction with a wireless power transmitting circuit in a wireless charging device, and outputs a direct current to a load in the electronic device, thereby implementing a wireless charging function of the electronic device. FIG. 11 is a diagram of a circuit structure of a wireless power receiving circuit 30 according to an embodiment of this application. As shown in FIG. 11, the wireless power receiving circuit 30 includes a receiving coil L2, a second impedance compensation module 310, a rectifying module 320, an impedance adjustment module 330, and a processing module 340.

The receiving coil L2 is configured to be coupled to a transmitting coil L1, so that power transmission can be performed between the receiving coil L2 and the transmitting coil L1 through an alternating magnetic field. Specifically, the receiving coil L2 is configured to receive the alternating magnetic field transmitted by the transmitting coil L1, and convert the alternating magnetic field into an alternating current and then output the alternating current. The receiving coil L2 may be a multi-turn planar coil, or may be a coil in another form, such as a magnetic rod coil in a stylus.

A first end of the second impedance compensation module 310 is connected to a first end of the receiving coil L2, and a second end of the second impedance compensation module 310 is connected to a first input end of the rectifying module 320. The second impedance compensation module 310 is configured to compensate leakage inductance on a receiving side, to implement impedance matching of the circuit, thereby improving a receiving power of wireless charging. The second impedance compensation module 310 may be a capacitor, or may be a higher-order circuit formed by a capacitor and an inductor connected in series or in parallel.

A second input end of the rectifying module 320 is connected to a second end of the receiving coil L2. An output end of the rectifying module 320 is configured to be connected to a load 410 of the electronic device. In this way, during operation of the wireless power receiving circuit 30, the receiving coil L2 may output an alternating current to the rectifying module 320 through the second impedance compensation module 310. After rectifying the alternating current, the rectifying module 320 may output a direct current to the load 410, thereby supplying power to the load 410. The rectifying module 320 may be a full-wave rectifying circuit, or may be a half-wave rectifying circuit.

A first end of the impedance adjustment module 330 is connected to the first end of the second impedance compensation module 310, and a second end of the impedance adjustment module 330 is connected to the second end of the second impedance compensation module 310. In other words, the impedance adjustment module 330 and the second impedance compensation module 310 are connected in parallel. The processing module 340 is connected to a control end of the impedance adjustment module 330, and is configured to control turn-on and turn-off of the impedance adjustment module 330. Turn-on of the impedance adjustment module 330 refers to that the first end and the second end of the impedance adjustment module 330 are turned on; and turn-off of the impedance adjustment module 330 refers to that the first end and the second end of the impedance adjustment module 330 are not turned on.

During operation of the wireless power receiving circuit 30, the impedance adjustment module 330 has two states: turn-on and turn-off. When the impedance adjustment module 330 is turned on, the impedance adjustment module 330 is connected to the wireless power receiving circuit 30; and when the impedance adjustment module 330 is turned off, the impedance adjustment module 330 is not connected to the wireless power receiving circuit 30. Based on this, when the impedance adjustment module 330 is switched between being connected to and not being connected to the wireless power receiving circuit 30, this is equivalent to a change in a load magnitude in the wireless power receiving circuit 30. In this way, an amplitude of an electrical signal in the receiving coil L2 changes, thereby transmitting digital information to the wireless power transmitting circuit. In other words, the processing module 340 can perform ASK modulation on a waveform of the electrical signal in the receiving coil L2 by controlling turn-on and turn-off of the impedance adjustment module 330. In the wireless power receiving circuit 30, the communication capacitor connected in parallel to the rectifying module 320 is removed, so that a problem that large capacitor howling is generated when the communication capacitor connected in parallel to the rectifying module 320 has a large plate vibration may be avoided.

In some optional embodiments, the impedance adjustment module 330 may not include a communication capacitor, but is formed by using a communication resistor. In this case, since the communication capacitor is removed, the problem that large capacitor howling is generated when the communication capacitor generates a plate vibration is avoided. In some other optional embodiments, the impedance adjustment module 330 may also include a communication capacitor. In this case, the communication capacitor is set to be connected in parallel to the second impedance compensation module 310. Since in a series loop formed by the receiving coil L2, the second impedance compensation module 310, and the rectifying module 320, a voltage of the second impedance compensation module 310 is much less than a voltage of the rectifying module 320, the communication capacitor is set to be connected in parallel to the second impedance compensation module 310. Compared with the related technology, this can greatly reduce a voltage across two ends of the communication capacitor, thereby attenuating the plate vibration of the communication capacitor, alleviating the problem that large capacitor howling is generated when the electronic device is wirelessly charged, and improving user experience.

It should be noted that, in the foregoing embodiment, for ease of understanding, the transmitting coil L1 and the load 410 are introduced to describe a connection manner and an operating process of the wireless power receiving circuit 30 provided in this embodiment of this application. In fact, the wireless power receiving circuit 30 does not include the transmitting coil L1 and the load 410. In other words, the transmitting coil L1 and the load 410 exist as environmental elements relative to the wireless power receiving circuit 30, and should not be understood as limitations to the wireless power receiving circuit 30 provided in this embodiment of this application.

The following describes circuit structures of electrical modules in the wireless power receiving circuit 30 in detail.

### 1. Circuit structure of the impedance adjustment module 330

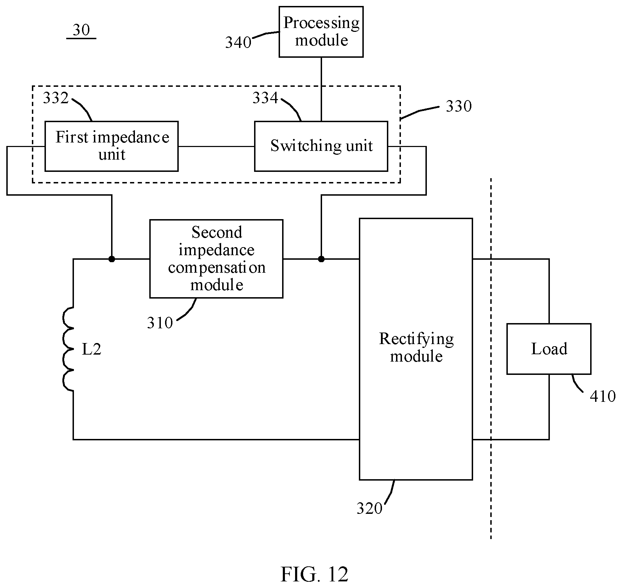

(1) FIG. 12 is a diagram of a circuit structure of another wireless power receiving circuit 30 according to an embodiment of this application. As shown in FIG. 12, in some embodiments, the impedance adjustment module 330 includes a first impedance unit 332 and a switching unit 334.

The first impedance unit 332 may be an impedance component, for example, a resistor or a capacitor. The first impedance unit 332 may alternatively be formed by a plurality of impedance components connected in series or in parallel. A first end of the first impedance unit 332 is connected to the first end of the second impedance compensation module 310. A second end of the first impedance unit 332 is connected to a first end of the switching unit 334.

The switching unit 334 may be a three-end switching component. The switching unit 334 further includes a second end and a control end, and the control end of the switching unit 334 may control turn-on and turn-off between the first end and the second end of the switching unit 334. The second end of the switching unit 334 is connected to the second end of the second impedance compensation module 310. In other words, in this embodiment, the first impedance unit 332 and the switching unit 334 are connected in series to form the impedance adjustment module 330.

The processing module 340 is connected to the control end of the switching unit 334. The processing module 340 is configured to control turn-on and turn-off of the switching unit 334, to control turn-on and turn-off of the impedance adjustment module 330. Turn-on of the switching unit 334 refers to that the first end and the second end of the switching unit 334 are turned on; and turn-off of the switching unit 334 refers to that the first end and the second end of the switching unit 334 are not turned on. In this embodiment, turn-on of the impedance adjustment module 330 refers to that the switching unit 334 in the impedance adjustment module 330 is turned on; and turn-off of the impedance adjustment module 330 refers to that the switching unit 334 in the impedance adjustment module 330 is turned off.

The following specifically describes structures of the first impedance unit 332 and the switching unit 334 by using the circuit structure shown in FIG. 12 as an example.

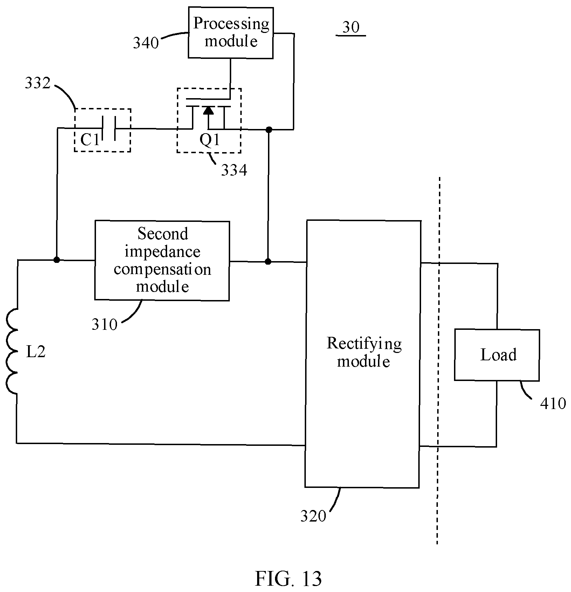

FIG. 13 is a diagram of a circuit of the wireless power receiving circuit 30 according to an embodiment of this application, and this diagram of the circuit corresponds to the circuit structure shown in FIG. 12. As shown in FIG. 13, in some embodiments, the first impedance unit 332 includes a first capacitor C1. A first electrode plate of the first capacitor C1 is connected to the first end of the second impedance compensation module 310, and a second electrode plate of the first capacitor C1 is connected to the first end of the switching unit 334. In this embodiment, the first capacitor C1 may be the first communication capacitor Ca in the related technology. In this case, the communication capacitor is set to be connected in parallel to the second impedance compensation module 310. Compared with the related technology, this can greatly reduce a voltage across two ends of the communication capacitor, thereby attenuating the plate vibration of the communication capacitor. In some other embodiments not shown, an impedance component in the first impedance unit 332 may alternatively be a resistor.

As shown in FIG. 13, in some embodiments, the switching unit 334 includes a first transistor Q1. The transistor refers to a field effect transistor (field effect transistor, FET), for example, a metal oxide semiconductor field effect transistor (metal oxide semiconductor field effect transistor, MOSFET). A first electrode of the first transistor Q1 is connected to the second end of the first impedance unit 332. A second electrode of the first transistor Q1 is connected to the second end of the second impedance compensation module 310. The processing module 340 is connected to a control electrode of the first transistor Q1 and the second electrode of the first transistor Q1, to control turn-on and turn-off of the first transistor Q1 and a second transistor Q2. In some other embodiments not shown, the switching unit 334 may alternatively be another three-terminal switching component, for example, a thyristor.

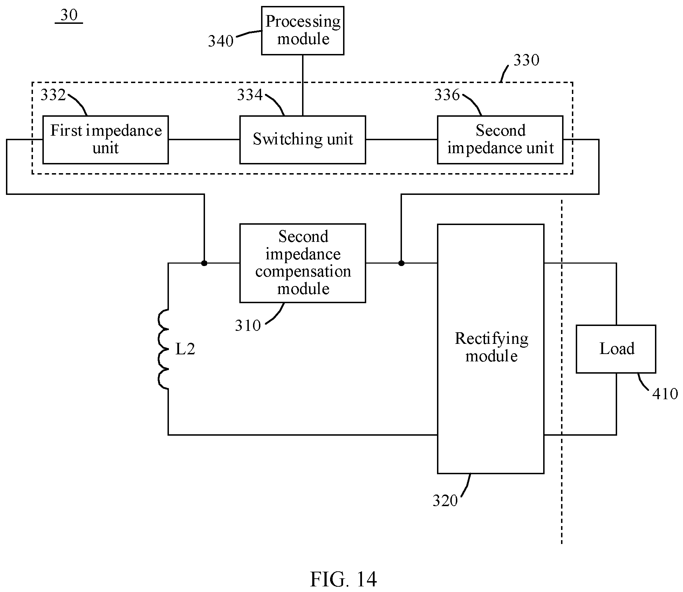

(2) In some other embodiments, based on that the impedance adjustment module 330 includes the first impedance unit 332 and the switching unit 334, further, as shown in FIG. 14, the impedance adjustment module 330 may further include a second impedance unit 336.

The second impedance unit 336 may be a single impedance component, or may be formed by a plurality of impedance components connected in series or in parallel. Generally, a structure of the second impedance unit 336 is the same as a structure of the first impedance unit 332. In this case, a first end of the second impedance unit 336 is connected to the second end of the switching unit 334, and a second end of the second impedance unit 336 is connected to the second end of the second impedance compensation module 310. In other words, the second end of the switching unit 334 is connected to the second end of the second impedance compensation module 310 through the second impedance unit 336. In this embodiment, the first impedance unit 332, the switching unit 334, and the second impedance unit 336 are connected in series to form the impedance adjustment module 330.

The following specifically describes structures of the first impedance unit 332 and the second impedance unit 336 by using the circuit structure shown in FIG. 14 as an example.

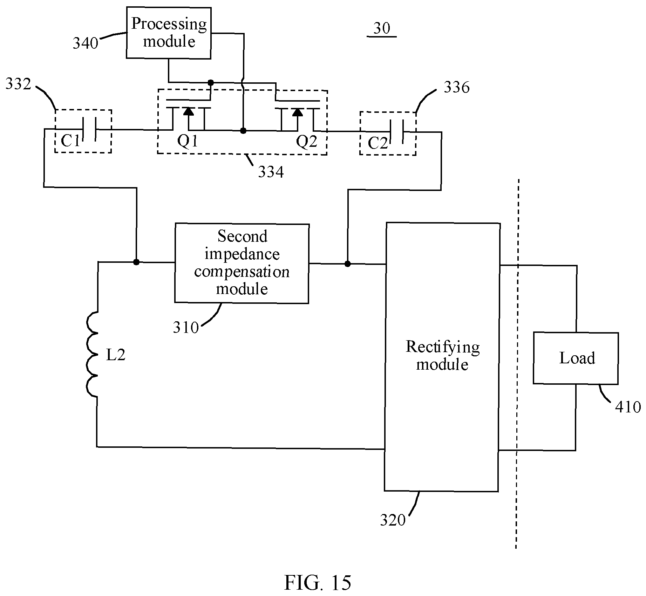

FIG. 15 is a diagram of a circuit of another wireless power receiving circuit 30 according to an embodiment of this application, and this diagram of the circuit corresponds to the circuit structure shown in FIG. 14. As shown in FIG. 15, in some embodiments, the first impedance unit 332 includes a first capacitor C1. A first electrode plate of the first capacitor C1 is connected to the first end of the second impedance compensation module 310, and a second electrode plate of the first capacitor C1 is connected to the first end of the switching unit 334. The second impedance unit 336 includes a second capacitor C2. A second electrode plate of the second capacitor C2 is connected to the second end of the switching unit 334, and a first electrode plate of the second capacitor C2 is connected to the second end of the second impedance compensation module 310.

In this embodiment, the first capacitor C1 may be the first communication capacitor Ca in the related technology, and the second capacitor C2 may be the second communication capacitor Cb in the related technology. Based on this, advantageous effects of this embodiment include: (1) The communication capacitor is set to be connected in parallel to the second impedance compensation module 310. Compared with the related technology, this can greatly reduce a voltage across two ends of the communication capacitor, thereby attenuating the plate vibration of the communication capacitor. (2) Compared with the related technology, only a connection manner of the first electrode plate of the second communication capacitor Cb (that is, the second capacitor C2 in this embodiment) is changed. This facilitates implementation of the technical solution and helps reduce costs of the electronic device.

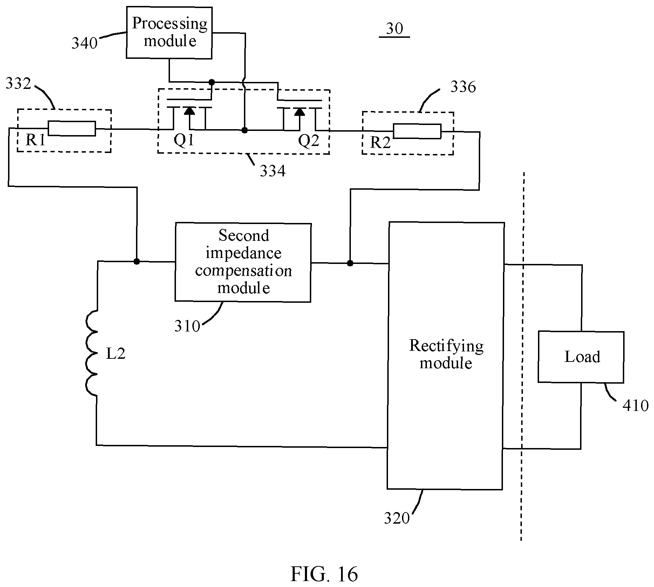

FIG. 16 is a diagram of a circuit of still another wireless power receiving circuit 30 according to an embodiment of this application, and this diagram of the circuit corresponds to the circuit structure shown in FIG. 14. As shown in FIG. 16, in some other embodiments, the first impedance unit 332 includes a first resistor R1. A first end of the first resistor R1 is connected to the first end of the second impedance compensation module 310, and a second end of the first resistor R1 is connected to the first end of the switching unit 334. The second impedance unit 336 includes a second resistor R2. A second end of the second resistor R2 is connected to the second end of the switching unit 334, and a first end of the second resistor R2 is connected to the second end of the second impedance compensation module 310.

The following specifically describes the structure of the switching unit 334 with reference to the circuits shown in FIG. 15 and FIG. 16.

As shown in FIG. 15 and FIG. 16, in some embodiments, the switching unit 334 includes the first transistor Q1 and the second transistor Q2. The first electrode of the first transistor Q1 is connected to the second end of the first impedance unit 332. The second electrode of the first transistor Q1 is connected to a second electrode of the second transistor Q2. A first electrode of the second transistor Q2 is connected to the second end of the second impedance compensation module 310. In other words, the first transistor Q1 and the second transistor Q2 are connected in series to form the switching unit 334. The processing module 340 is connected to a control electrode of the first transistor Q1, a control electrode of the second transistor Q2, the second electrode of the first transistor Q1, and the second electrode of the second transistor Q2, and is configured to control turn-on and turn-off of the first transistor Q1 and the second transistor Q2.

In some specific embodiments, as shown in FIG. 15 and FIG. 16, the first transistor Q1 and the second transistor Q2 are both N-type MOSFETs. The first electrode of the first transistor Q1 and the first electrode of the second transistor Q2 are both drains of the N-type transistors. The second electrode of the first transistor Q1 and the second electrode of the second transistor Q2 are sources of the N-type transistors. In this case, the processing module 340 may have a first port and a second port. The first port of the processing module 340 is connected to the control electrode of the first transistor Q1 and the control electrode of the second transistor Q2, and the second port of the processing module 340 is connected to the second electrode of the first transistor Q1 and the second electrode of the second transistor Q2. When the processing module 340 needs to control the switching unit 334 to be turned on, the first port of the processing module 340 may output a high-level signal, and the second port of the processing module 340 may output a low-level signal, so that a difference between a gate voltage and a source voltage of the first transistor Q1 is greater than a threshold voltage of the first transistor Q1, and a difference between a gate voltage and a source voltage of the second transistor Q2 is greater than a threshold voltage of the second transistor Q2. In this way, the first transistor Q1 and the second transistor Q2 are both turned on. When the processing module 340 needs to control the switching unit to be turned off, the first port of the processing module 340 may output a low-level signal, and the second port of the processing module 340 may output a high-level signal, so that the difference between the gate voltage and the source voltage of the first transistor Q1 is less than the threshold voltage of the first transistor Q1, and the difference between the gate voltage and the source voltage of the second transistor Q2 is less than the threshold voltage of the second transistor Q2. In this way, the first transistor Q1 and the second transistor Q2 are both turned off. In some other embodiments not shown, the first transistor Q1 and the second transistor Q2 may alternatively be P-type MOSFETs. This is not described in detail again.

### 2. Circuit structure of the processing module 340

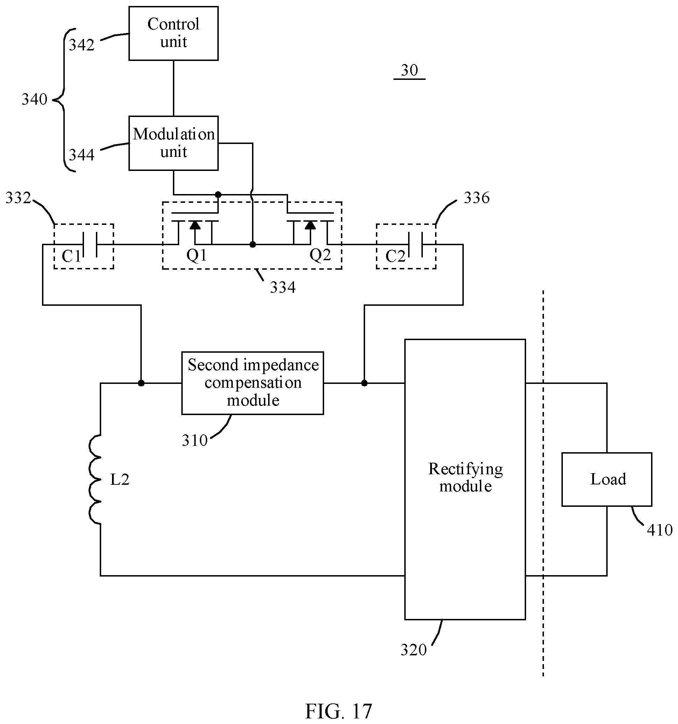

FIG. 17 is a diagram of a circuit of still another wireless power receiving circuit 30 according to an embodiment of this application. As shown in FIG. 17, in some embodiments, the processing module 340 includes a control unit 342 and a modulation unit 344.

The control unit 342 may be a micro controller unit (micro controller unit, MCU), that is, a single chip microcomputer (single chip microcomputer, SCM). An output end of the control unit 342 is connected to an input end of the modulation unit 344. The control unit 342 is configured to generate a control signal based on communication information, and transmit the control signal to the modulation unit 344. The communication information may be pre-stored in the control unit 342, or may be transmitted from a system on chip (system on chip, SOC) in the electronic device to the control unit 342.

An output end of the modulation unit 344 is connected to the control end of the impedance adjustment module 330. The modulation unit 344 is configured to modulate the control signal to generate a modulation signal. The modulation signal is used to control turn-on and turn-off of the impedance adjustment module 330.

Specifically, when the electronic device in which the wireless power receiving circuit 30 is used approaches the wireless charging device, the transmitting coil L1 starts outputting an electrical signal based on electromagnetic induction. The control unit 342 can detect whether the transmitting coil L1 outputs the electrical signal, and when the control unit 342 detects that the transmitting coil L1 starts outputting the electrical signal, the control signal can be generated based on the communication information. The communication information may be, for example, a coupling degree that is between the transmitting coil L1 and the receiving coil L2 and that is detected by the control unit 342, and an ID of the electronic device. The control signal is outputted to the modulation unit 344, and after the modulation unit 344 receives the control signal, the modulation unit 344 modulates the control signal to generate the modulation signal.

It can be understood that, when the first transistor Q1 and the second transistor Q2 are both the N-type MOSFETs, the output end of the modulation unit 344 may include a first port and a second port. The first port of the modulation unit 344 is connected to the control electrode of the first transistor Q1 and the control electrode of the second transistor Q2. In other words, the first port of the modulation unit 344 is the first port of the processing module 340. The second port of the modulation unit 344 is connected to the second electrode of the first transistor Q1 and the second electrode of the second transistor Q2. In other words, the second port of the modulation unit 344 is the second port of the processing module 340.

### 3. Circuit structure of the second impedance compensation module 310

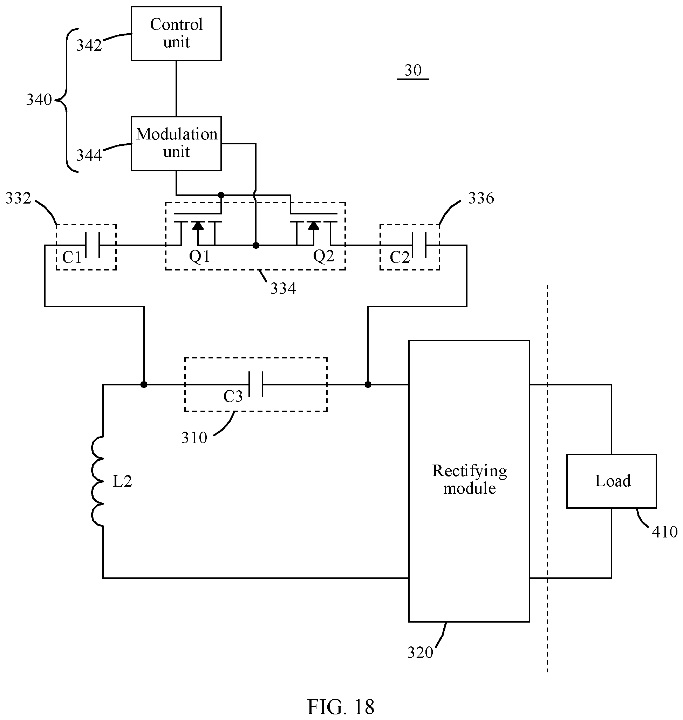

FIG. 18 is a diagram of a circuit of still another wireless power receiving circuit 30 according to an embodiment of this application. As shown in FIG. 18, in some embodiments, the second impedance compensation module 310 includes a third capacitor C3. A first electrode plate of the third capacitor C3 is connected to the first end of the receiving coil L2 and the first end of the impedance adjustment module 330. A second electrode plate of the third capacitor C3 is connected to the first input end of the rectifying module 320 and the second end of the impedance adjustment module 330.

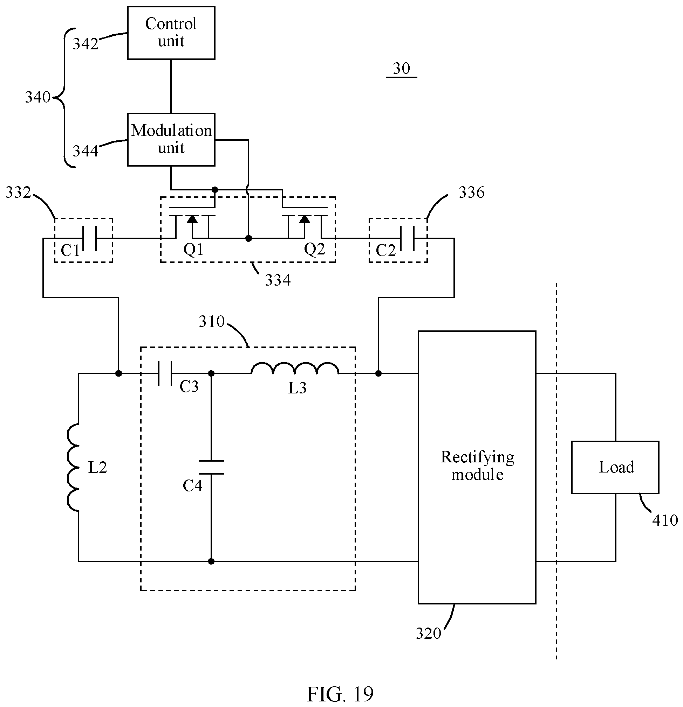

Further, as shown in FIG. 19, in some other embodiments, the second impedance compensation module 310 may further include a fourth capacitor C4 and an inductor L3.

The second electrode plate of the third capacitor C3 is connected to a first electrode plate of the fourth capacitor C4 and a first end of the inductor L3. A second end of the inductor L3 is connected to the first input end of the rectifying module 320 and the second end of the impedance adjustment module 330. In other words, the second electrode plate of the third capacitor C3 is connected to the first input end of the rectifying module 320 and the second end of the impedance adjustment module 330 through the inductor L3. A second electrode plate of the fourth capacitor C4 is connected to the second end of the receiving coil L2. In some other embodiments, the second electrode plate of the fourth capacitor C4 may also be connected to the ground.

### 4. Circuit structure of the rectifying module 320

In an embodiment of this application, the rectifying module 320 may be a full-wave rectifying circuit, or may be a half-wave rectifying circuit. These are described respectively below.

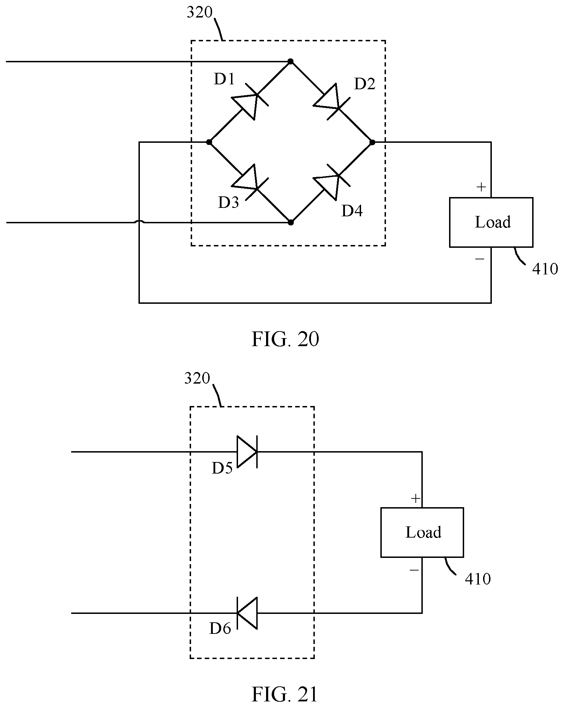

FIG. 20 is a diagram of a circuit of the rectifying module 320 according to an embodiment of this application. As shown in FIG. 20, in some embodiments, the rectifying module 320 is a full-wave rectifying circuit. In this case, the rectifying module 320 includes a first diode D1, a second diode D2, a third diode D3, and a fourth diode D4.

A cathode of the first diode D1 is connected to an anode of the second diode D2. An anode of the first diode D1 is connected to an anode of the third diode D3. A cathode of the third diode D3 is connected to an anode of the fourth diode D4. A cathode of the fourth diode D4 is connected to a cathode of the second diode D2. In this case, the anode of the second diode D2 is the first input end of the rectifying module 320, and is connected to the second end of the impedance compensation module. The anode of the fourth diode D4 is the second input end of the rectifying module 320, and is connected to the second end of the receiving coil L2. The cathode of the second diode D2 and the cathode of the fourth diode D4 are configured to be connected to a positive electrode of the load 410, and the anode of the first diode D1 and the anode of the third diode D3 are configured to be connected to a negative electrode of the load 410.

During operation of the rectifying module 320, if a current flows out from the first end of the receiving coil L2, the current may flow successively through the second diode D2, the positive electrode of the load 410, the negative electrode of the load 410, and the third diode D3, and then flow into the second end of the receiving coil L2. If a current flows out from the second end of the receiving coil L2, the current may flow successively through the fourth diode D4, the positive electrode of the load 410, the negative electrode of the load 410, and the first diode D1, and then flow into the first end of the receiving coil L2.

It can be understood that, in some other embodiments, the first diode D1, the second diode D2, the third diode D3, and the fourth diode D4 may also be replaced by MOSFETs.

FIG. 21 is a diagram of a circuit of another rectifying module 320 according to an embodiment of this application. As shown in FIG. 21, in some other embodiments, the rectifying module 320 is a half-wave rectifying circuit. In this case, the rectifying module 320 includes a fifth diode D5 and a sixth diode D6.

An anode of the fifth diode D5 is the first input end of the rectifying module 320, and is connected to the second end of the impedance compensation module. A cathode of the sixth diode D6 is connected to the second end of the receiving coil L2. A cathode of the fifth diode D5 is configured to be connected to the positive electrode of the load 410, and an anode of the sixth diode D6 is configured to be connected to the negative electrode of the load 410.

During operation of the rectifying module 320, if a current flows out from the first end of the receiving coil L2, the current may flow successively through the fifth diode D5, the positive electrode of the load 410, the negative electrode of the load 410, and the sixth diode D6, and then flow into the second end of the receiving coil L2. If a current flows out from the second end of the receiving coil L2, the current cannot flow into the load 410 due to unilateral conduction of the diodes.

It can be understood that, in some other embodiments, the rectifying module 320 may include only one of the fifth diode D5 and the sixth diode D6. The fifth diode D5 and the sixth diode D6 may alternatively be replaced by transistors.

Embodiments of this application further provide an electronic device. The electronic device includes a load 410 and the wireless power receiving circuit 30 according to any of the foregoing embodiments. An output end of the wireless power receiving circuit 30 is connected to the load 410, and is configured to output an electrical signal to the load 410. In this case, the output end of the wireless power receiving circuit 30 refers to an output end of a rectifying module 320.

The load 410 refers to a power consumption component in the electronic device. In some embodiments, the load 410 includes, but is not limited to, at least one of an energy storage module for storing power, a memory for data storage, a radio frequency module for wireless communication, a Bluetooth (bluetooth) module, an SOC, a display screen, a loudspeaker, a microphone, a camera, a motor, and a sensor (for example, a pressure sensor, a gyroscope sensor, a barometer sensor, a magnetic sensor, an acceleration sensor, a distance sensor, a proximity light sensor, a temperature sensor, an ambient light sensor, or a bone conduction sensor). The SOC includes a central processing unit (central processing unit, CPU), a graphics processing unit (graphics processing unit, GPU), a baseband processor, and the like. The memory includes an internal memory and an external memory. A voltage conversion circuit may further be connected between the wireless power receiving circuit 30 and the load 410. The voltage conversion circuit may be a buck (buck) circuit or a boost (boost) circuit.

Embodiments of this application further provide a wireless charging system. The wireless charging system includes a wireless charging device and an electronic device. The wireless charging device is configured to wirelessly charge the electronic device. The wireless charging device includes a power adapter and a charging base. A wireless power transmitting circuit is provided in the charging base. During operation of the wireless charging device, the power adapter is configured to output a direct current to the wireless power transmitting circuit.

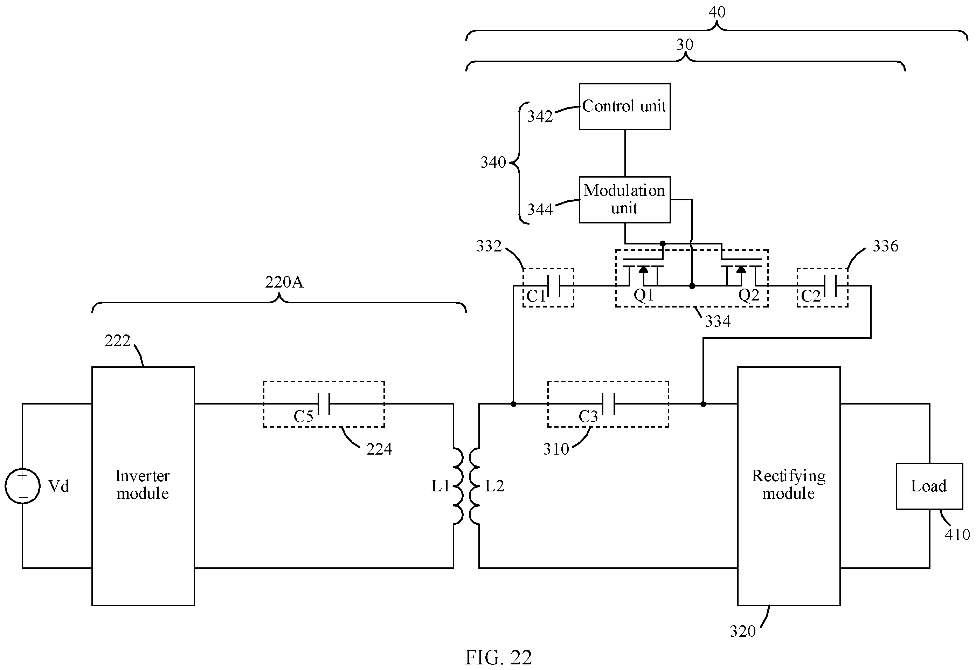

FIG. 22 is a diagram of a circuit of power transmission and ASK modulation of a wireless charging system according to an embodiment of this application, where a direct current power supply Vd represents the power adapter. As shown in FIG. 22, a wireless power transmitting circuit 220A includes an inverter module 222, a first impedance compensation module 224, and a transmitting coil L1; and the electronic device 40 includes the load 410 and the wireless power receiving circuit 30 in any of the foregoing embodiments. This is not described in detail again. In an embodiment of this application, the wireless power receiving circuit 30 includes a receiving coil L2, a second impedance compensation module 310, a rectifying module 320, an impedance adjustment module 330, and a processing module 340. The processing module 340 can perform ASK modulation on a waveform of an electrical signal in the receiving coil L2 by controlling turn-on and turn-off of the impedance adjustment module 330, thereby transmitting communication information to the wireless power transmitting circuit 220A.

The following describes circuit structures of electrical modules in the wireless power transmitting circuit 220A in detail.

### 1. Structure of the transmitting coil L1

The transmitting coil L1 is configured to convert an alternating current into an alternating magnetic field and transmit the alternating magnetic field into space. The transmitting coil L1 may be a multi-turn planar coil, or may be a coil in another form, such as a magnetic rod coil in a tablet computer.

### 2. Circuit structure of the first impedance compensation module 224

The circuit structure of the first impedance compensation module 224 is generally the same as the circuit structure of the second impedance compensation module 310. As shown in FIG. 22, when the second impedance compensation module 310 includes only a third capacitor C3, the first impedance compensation module 224 may include only a fifth capacitor C5. A first electrode plate of the fifth capacitor C5 is connected to a first output end of the inverter module 222, and a second electrode plate of the fifth capacitor C5 is connected to a first end of the transmitting coil L1. Capacitance values of the fifth capacitor C5 and the third capacitor C3 may be different. In some other embodiments, the first impedance compensation module 224 may alternatively be a higher-order circuit formed by a capacitor and an inductor connected in series or in parallel. In this case, the first impedance compensation module 224 may be configured to compensate leakage inductance on a transmitting side, and implement impedance matching on the transmitting side, thereby increasing a wireless charging power, improving a phase of wireless charging, and further increasing a gain of wireless charging.

### 3. Circuit structure of the inverter module 222

In this embodiment of this application, the inverter module 222 may be a full-wave inverter circuit or a half-wave inverter circuit. These are described respectively below.

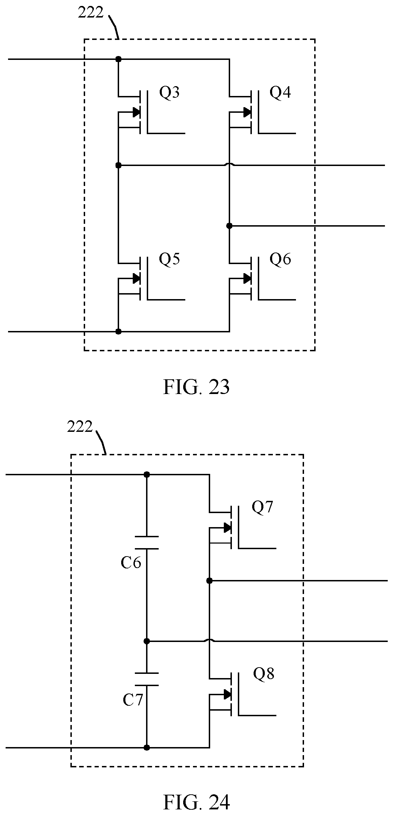

FIG. 23 is a diagram of a circuit of the inverter module 222 according to an embodiment of this application. As shown in FIG. 23, in some embodiments, the inverter module 222 is a full-wave inverter circuit. In this case, the rectifying module 320 includes a third transistor Q3, a fourth transistor Q4, a fifth transistor Q5, and a sixth transistor Q6.

The third transistor Q3, the fourth transistor Q4, the fifth transistor Q5, and the sixth transistor Q6 are all N-type MOSFETs. A first electrode (drain) of the third transistor Q3 and a first electrode of the fourth transistor Q4 are both connected to a positive electrode of the direct current power supply Vd. A second electrode (source) of the third transistor Q3 is connected to a first electrode of the fifth transistor Q5. A second electrode of the fourth transistor Q4 is connected to a first electrode of the sixth transistor Q6. A second electrode of the fifth transistor Q5 and a second electrode of the sixth transistor Q6 are both connected to a negative electrode of the direct current power supply Vd. In this case, a node formed by connecting the first electrode of the third transistor Q3 and the first electrode of the fourth transistor Q4 serves as a first input end of the inverter module 222. A node formed by connecting the second electrode of the fifth transistor Q5 and the second electrode of the sixth transistor Q6 serves as a second input end of the inverter module 222. A node formed by connecting the second electrode of the third transistor Q3 and the first electrode of the fifth transistor Q5 serves as a first output end of the inverter module 222, and is configured to be connected to a first end of the first impedance compensation module 224. A node formed by connecting the second electrode of the fourth transistor Q4 and the first electrode of the sixth transistor Q6 serves as a second output end of the inverter module 222, and is configured to be connected to a second end of the transmitting coil L1.

During operation of the inverter module 222, the inverter module 222 is configured to output an alternating current. One cycle of the alternating current includes a first half-cycle and a second half-cycle. In the first half-cycle, the third transistor Q3 and the sixth transistor Q6 are turned on, and the fourth transistor Q4 and the fifth transistor Q5 are turned off. In this way, the current can flow out from the positive electrode of the direct current power supply Vd, successively flow through the third transistor Q3, the first impedance compensation module 224, the first end and the second end of the transmitting coil L1, and the sixth transistor Q6, and then flow into the negative electrode of the direct current power supply Vd. In the second half-cycle, the third transistor Q3 and the sixth transistor Q6 are turned off, and the fourth transistor Q4 and the fifth transistor Q5 are turned on. In this way, the current can flow out from the positive electrode of the direct current power supply Vd, successively flow through the fourth transistor Q4, the second end and the first end of the transmitting coil L1, the first impedance compensation module 224, and the fifth transistor Q5, and then flow into the negative electrode of the direct current power supply Vd. In this process, a frequency of the alternating current outputted by the inverter module 222 can be controlled by controlling operating frequencies of the third transistor Q3, the fourth transistor Q4, the fifth transistor Q5, and the sixth transistor Q6.

FIG. 24 is a diagram of a circuit of another inverter module 222 according to an embodiment of this application. As shown in FIG. 24, in some other embodiments, the inverter module 222 is a half-wave inverter circuit. In this case, the inverter module 222 includes a seventh transistor Q7, an eighth transistor Q8, a sixth capacitor C6, and a seventh capacitor C7.

The seventh transistor Q7 and the eighth transistor Q8 are both N-type MOSFETs. A first electrode plate of the sixth capacitor C6 and a first electrode of the seventh transistor Q7 are both connected to the positive electrode of the direct current power supply Vd. A second electrode plate of the sixth capacitor C6 is connected to a first electrode plate of the seventh capacitor C7. A second electrode of the seventh transistor Q7 is connected to a first electrode of the eighth transistor Q8. A second electrode plate of the seventh capacitor C7 and a second electrode of the eighth transistor Q8 are both connected to the negative electrode of the direct current power supply Vd. In this case, a node formed by connecting the first electrode plate of the sixth capacitor C6 and the first electrode of the seventh transistor Q7 serves as the first input end of the inverter module 222. A node formed by connecting the second electrode plate of the seventh capacitor C7 and the second electrode of the eighth transistor Q8 serves as the second input end of the inverter module 222. A node formed by connecting the second electrode of the seventh transistor Q7 and the first electrode of the eighth transistor Q8 serves as the first output end of the inverter module 222, and is configured to be connected to the first end of the first impedance compensation module 224. A node formed by connecting the second electrode plate of the sixth capacitor C6 and the first electrode plate of the seventh capacitor C7 serves as the second output end of the inverter module 222, and is configured to be connected to the second end of the transmitting coil L1.

During operation of the inverter module 222, the inverter module 222 is configured to output an alternating current. One cycle of the alternating current includes a first half-cycle and a second half-cycle. In the first half-cycle, the seventh transistor Q7 is turned on, and the eighth transistor Q8 is turned off. In this way, the current can flow out from the first electrode plate of the sixth capacitor C6, successively flow through the seventh transistor Q7, the first impedance compensation module 224, the first end and the second end of the transmitting coil L1, and then flow into the second electrode plate of the sixth capacitor C6. In the second half-cycle, the seventh transistor Q7 is turned off, and the eighth transistor Q8 is turned on. In this way, the current can flow out from the first electrode plate of the seventh capacitor C7, successively flow through the second end and the first end of the transmitting coil L1, the first impedance compensation module 224, and the eighth transistor Q8, and then flow into the second electrode plate of the seventh capacitor C7.

### 4. Circuit structure of the ASK demodulation module 226

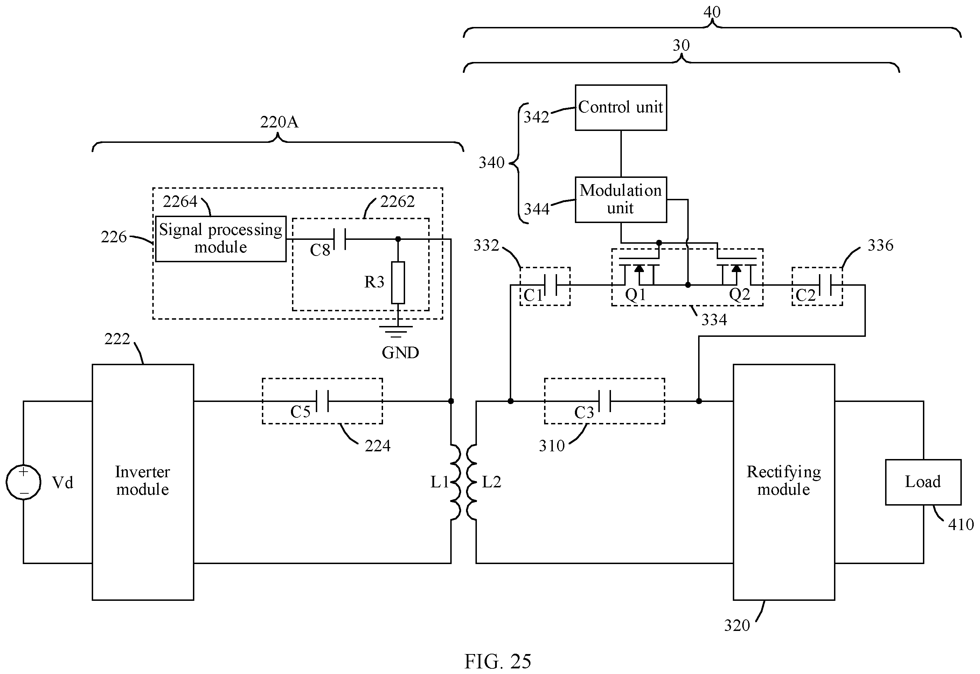

FIG. 25 is a diagram of a circuit of power transmission and ASK communication of a wireless charging system according to an embodiment of this application. As shown in FIG. 25, to implement ASK communication, the ASK demodulation module 226 may include a filtering module 2262 and a signal processing module 2264.

Generally, during operation of the wireless charging system, an ASK communication frequency is less than an operating frequency of wireless charging. For example, in some specific embodiments, the operating frequency of wireless charging is about 130 KHz (KHz), and the ASK communication frequency is about 2 KHz. Based on this, the filtering module 2262 may be provided between the transmitting coil L1 and the signal processing module 2264. The filtering module 2262 is configured to filter out an electrical signal for wireless charging (that is, an electrical signal having a frequency of 130 KHz), and retain only an electrical signal for ASK communication (that is, an electrical signal having a frequency of 2 KHz). The filtering module 2262 may be a low-pass filtering circuit or a band-pass filtering circuit. For example, in the embodiment shown in FIG. 25, the filtering module 2262 is a low-pass filtering circuit formed by connecting an eighth capacitor C8 and a third resistor R3. A first electrode plate of the eighth capacitor C8 is connected to the first end of the transmitting coil L1, and a second electrode plate of the eighth capacitor C8 is connected to the signal processing module 2264. A first end of the third resistor R3 is connected to the first electrode plate of the eighth capacitor C8, and a second end of the third resistor R3 is connected to the ground GND. A voltage of the ground GND is generally equal to a voltage of the negative electrode of the direct current power supply Vd. The signal processing module 2264 is configured to process an ASK communication signal, to obtain communication information transmitted by the electronic device 40.

The following analyzes the advantageous effects brought by applying the wireless power receiving circuit 30 provided in this embodiment of this application to the electronic device 40 in detail, in comparison with the related technology, by using the wireless charging systems shown in FIG. 22 and FIG. 25 as examples.

In the related technology, as described above, the voltage on the communication capacitor is the alternating sinusoidal voltage, and the peak of this voltage is proportional to the output voltage of the rectifying module 320. Specifically,${V}_{pp} = 2 \times {V}_{p} = \frac{8}{π} {V}_{out}$*.* In this case, *Vₚₚ* is the peak-to-peak value of the voltage on the communication capacitor, *Vₚ* is the peak value of the voltage on the communication capacitor, and *Vₒᵤₜ* is the output voltage of the rectifying module 320.

In this case, when the output power of the rectifying module 320 is 50 W (W), the output voltage is 20 V (V), and the output current is 2.5 A (A), it can be obtained that the peak-to-peak value of the voltage on the communication capacitor is about 51 V. The larger the capacitance value of the communication capacitor is, the more significant the piezoelectric effect is and the greater the plate vibration is.

To more intuitively observe the peak-to-peak value of the voltage on the communication capacitor in this embodiment of this application, the following analyzes a diagram of an equivalent circuit of the wireless charging system in this embodiment of this application.

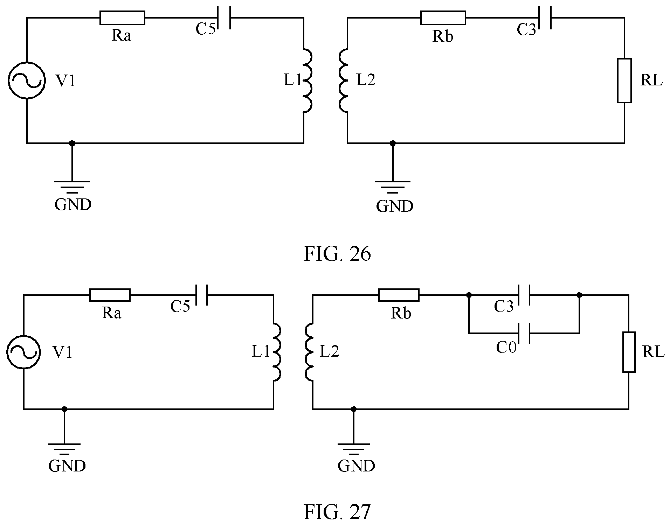

FIG. 26 is a diagram of an equivalent circuit of a wireless charging system when the switching unit 334 is turned off according to an embodiment of this application, and specifically, FIG. 26 is a diagram of an equivalent circuit of the circuit diagram shown in FIG. 22 in a case that the switching unit 334 is turned off. The direct current power supply Vd and the inverter module 222 are combined and simplified as an alternating current power supply V1. A resistor Ra is an equivalent resistor in the wireless power transmitting circuit 220A. A resistor Rb is an equivalent resistor in the wireless power receiving circuit 30. A load resistor RL is an equivalent resistor of the load 410 connected to the wireless power receiving circuit 30. The second end of the transmitting coil L1 and the second end of the receiving coil L2 are both connected to the ground GND. As can be seen from FIG. 26 and FIG. 9, when the switching unit 334 is turned off, the equivalent circuit of the wireless charging system according to this embodiment of this application is the same as the equivalent circuit of the wireless charging system in the related technology.

FIG. 27 is a diagram of an equivalent circuit of a wireless charging system when the switching unit 334 is turned on according to an embodiment of this application, and specifically, FIG. 27 is a diagram of an equivalent circuit of the circuit diagram shown in FIG. 22 in a case that the switching unit 334 is turned on. A capacitor C0 is a single-ended capacitor in the communication capacitors (including the first capacitor C1 and the second capacitor C2). In other words, the capacitor C0 is any one of the first capacitor C1 and the second capacitor C2. Generally, a capacitance value of the first capacitor C1 is equal to a capacitance value of the second capacitor C2.

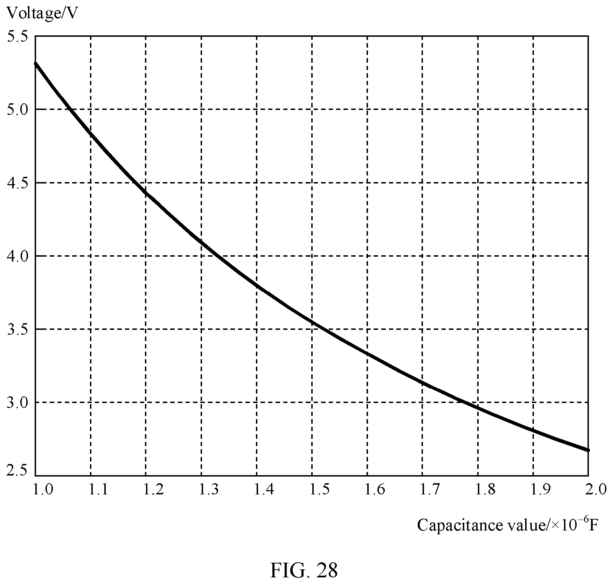

Using an example in which the electronic device 40 is a mobile phone and the wireless charging device 20 is a wireless charger, the foregoing equivalent circuit is analyzed. In the equivalent circuit, an inductance value of the transmitting coil L1 is 12 µH (µH), an inductance value of the receiving coil L2 is 4.8 µH, a capacitance value of the fifth capacitor C5 is 247 nF (nF), a capacitance value of the third capacitor C3 is 990 nF, a coupling coefficient between the transmitting coil L1 and the receiving coil L2 is 0.73, a resistance value of the resistor Ra is 200 mΩ (mΩ), a resistance value of the resistor Rb is 300 mΩ, and a resistance value of the load resistor RL is 6.5 Ω. When the switching unit 334 is turned on, this is equivalent to adding the capacitor C0 into the circuit. Since the capacitor C0 and the third capacitor C3 are connected in parallel, an increase of the capacitor C0 may be regarded as an increase of the capacitance value of the third capacitor C3. Based on this, using the capacitance value of the third capacitor C3 as a variable, a change of the voltage across the two ends of the third capacitor C3 with the capacitance value of the third capacitor C3 is measured as shown in FIG. 28. In FIG. 28, a horizontal coordinate represents the capacitance value of the third capacitor C3, in units of 10⁻⁶F; and a vertical coordinate represents the voltage across the two ends of the third capacitor C3, in units of V. As can be seen from FIG. 28, when the capacitance value of the third capacitor C3 increases from 1000 nF to 2000 nF, the voltage across the two ends gradually decreases. When the capacitance value of the third capacitor C3 is minimum (that is, the capacitance value of the third capacitor C3 is 1000 nF, which is equivalent to that the switching unit 334 is turned off and the capacitor C0 is cut out), the voltage across the two ends of the third capacitor C3 is also about 5 V (approximately 5.3 V). In other words, a peak value of the voltage across the two ends of the third capacitor C3 is about 5 V, approximately 5.3 V, and the peak-to-peak value of the voltage across the two ends of the third capacitor C3 is about 10 V, approximately 10.6 V. A voltage across two ends of the capacitor C0 is equal to the voltage across the two ends of the third capacitor C3. It can be seen that, in this embodiment of this application, the peak-to-peak value (approximately 10.6 V) of the voltage on the communication capacitor is much less than the peak-to-peak value (approximately 51 V) of the voltage on the communication capacitor in the related technology, thereby solving the problem of the plate vibration of the communication capacitor.

The following builds a simulation circuit by using simulation software, and comparatively observes voltages and currents at various positions of the wireless charging system in the related technology and the wireless charging system in this embodiment of this application.

In the simulation circuit of the wireless charging system in the related technology, capacitance values of the first communication capacitor Ca and the second communication capacitor Cb are both 69 nF. The first communication capacitor Ca and the second communication capacitor Cb are both formed by a 47 nF capacitor and a 22 nF capacitor connected in parallel.

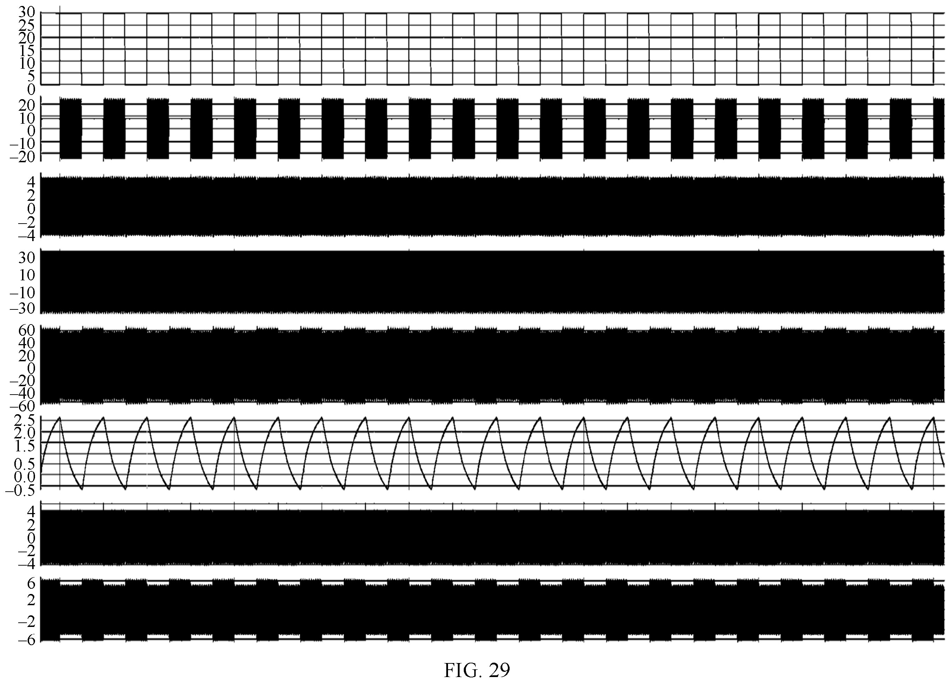

Waveform diagrams of electrical signals at various positions of the simulation circuit of the wireless charging system in the related technology are shown in FIG. 29. In FIG. 29, eight waveform diagrams of electrical signals from top to bottom in a direction perpendicular to a paper surface are: a voltage waveform diagram of a modulation signal, a voltage waveform diagram of the capacitor C03 (communication capacitor), a voltage waveform diagram of the capacitor C02 (second impedance compensation module 310), a voltage waveform diagram of the alternating current power supply V1, a voltage waveform diagram of the transmitting coil L1, a voltage waveform diagram of a voltage received by the signal processing module, a current waveform diagram of the receiving coil L2, and a current waveform diagram of the transmitting coil L1 in sequence. In a vertical coordinate direction, a voltage unit is V, and a current unit is A. As can be seen from FIG. 29, in the related technology, the voltage peak across the two ends of the capacitor C03 serving as the communication capacitor is about 26 V, and the peak-to-peak value is about 52 V, which is substantially consistent with the foregoing analysis. In addition, in the related technology, a voltage across two ends of the capacitor C02 serving as the impedance compensation module on the receiving side is about 5.5 V, and a peak-to-peak value is about 11 V. When the switching unit 142 is turned on (that is, when a level of the modulation signal changes), the voltage waveform of the alternating current power supply V1 is substantially unchanged, and the voltage on the transmitting coil L1 changes significantly. The signal processing module can receive the waveform of an electrical signal with an obvious change. With the change of the voltage on the transmitting coil L1, the current on the receiving coil L2 is substantially unchanged, and the current on the transmitting coil L1 changes significantly. In addition, based on a simulation result, in the related technology, an input power of the wireless charging system is about 56 W, an output power is about 49.9 W, and a system efficiency is about 89%.

In the simulation circuit of the wireless charging system in this embodiment of this application, capacitance values of the first capacitor C1 and the second capacitor C2 are also 69 nF, and the first capacitor C1 and the second capacitor C2 are both formed by a 47 nF capacitor and a 22 nF capacitor connected in parallel. The third capacitor C3 is 990 nF. In other words, when the switching unit 334 is turned on, this is equivalent to that the third capacitor C3 changes from 990 nF to 1059 nF.

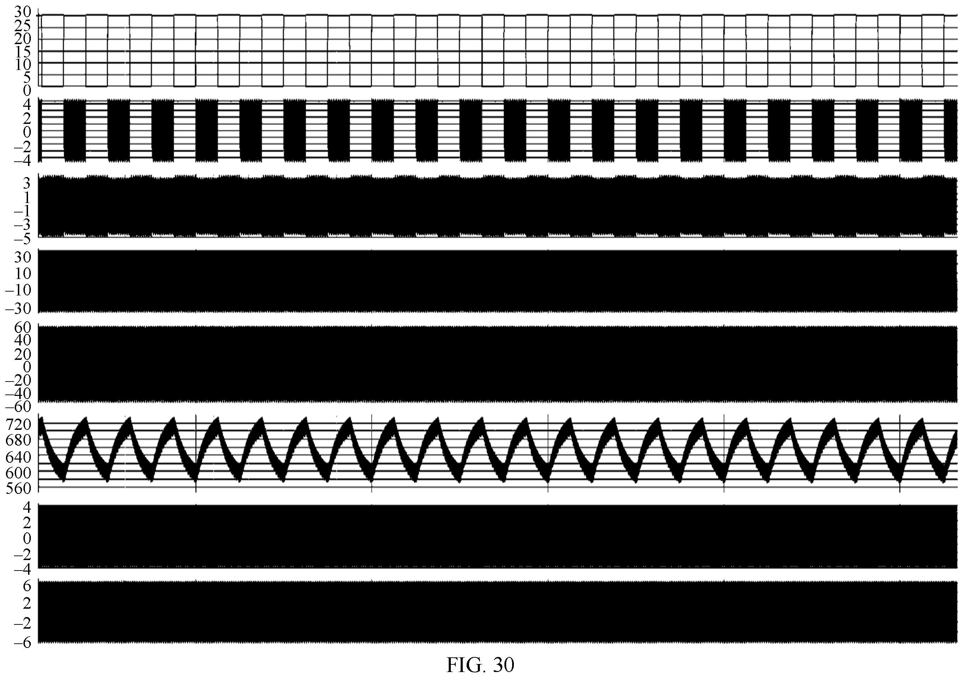

Waveform diagrams of electrical signals at various positions of the simulation circuit of the wireless charging system in this embodiment of this application are shown in FIG. 30. In FIG. 30, eight waveform diagrams of electrical signals from top to bottom in a direction perpendicular to a paper surface are: a voltage waveform diagram of a modulation signal, a voltage waveform diagram of a capacitor C0 (communication capacitor), a voltage waveform diagram of a third capacitor C3 (second impedance compensation module 310), a voltage waveform diagram of the alternating current power supply V1, a voltage waveform diagram of the transmitting coil L1, a voltage waveform diagram of a voltage received by the signal processing module 2264, a current waveform diagram of the receiving coil L2, and a current waveform diagram of the transmitting coil L1 in sequence. In a vertical coordinate direction, a voltage unit is V, and a current unit is A. As can be seen from FIG. 30, in this embodiment of this application, a peak-to-peak value of a voltage across two ends of the capacitor C0 serving as the communication capacitor is about 9.27 V, and a voltage peak across two ends of the third capacitor C3 serving as the impedance compensation module on the receiving side is about 9.9 V, which is substantially consistent with the foregoing analysis. The voltage of the capacitor C0 is slightly less than the voltage of the third capacitor C3 because there is a specific voltage on the first transistor Q1 and the second transistor Q2. Based on this, in this embodiment of this application, the plate vibration of the communication capacitor can be effectively reduced. In addition, in this embodiment of this application, when the level of the modulation signal changes, the signal processing module 2264 can receive the waveform of the electrical signal with an obvious change. When the level of the modulation signal changes, a voltage waveform of the alternating current power supply V1, a voltage waveform of the transmitting coil L1, a current waveform of the receiving coil L2, and a current waveform of the transmitting coil L1 are all substantially unchanged. In addition, based on a simulation result, in this embodiment of this application, an input power of the wireless charging system is about 59 W, an output power is about 54 W, and a system efficiency is about 91%. It can be seen that a charging power of the wireless charging system is also improved to some extent.

Finally, ASK communication capabilities of the wireless charging system in the related technology and the wireless charging system in this embodiment of this application are compared through experiments.

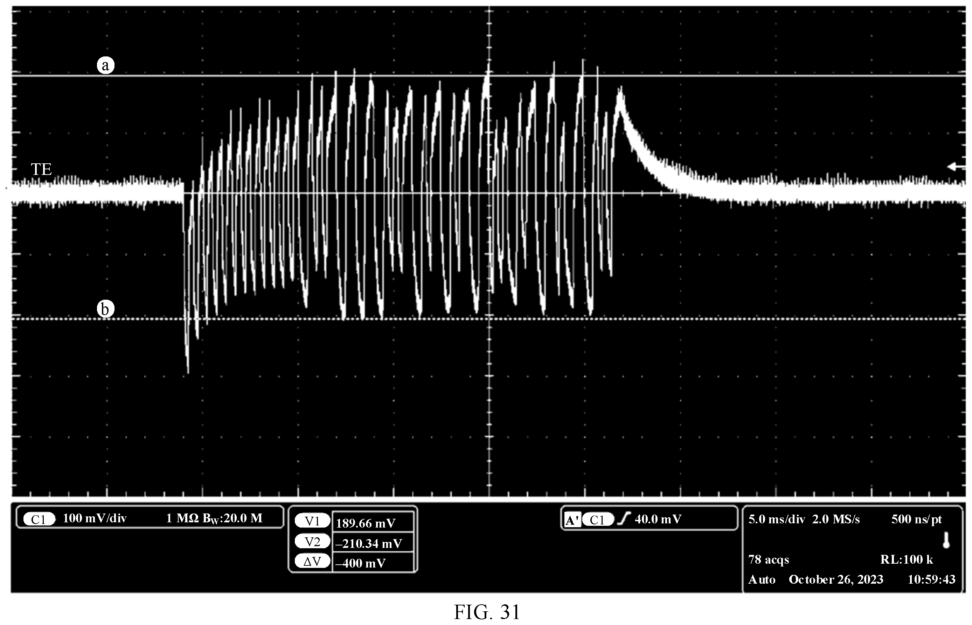

When the wireless charging system in the related technology performs ASK communication, a waveform of a demodulated signal obtained by the ASK demodulation module 226 is shown in FIG. 31. As can be seen from FIG. 31, in the related technology, when ASK communication is performed, a maximum voltage value of the demodulated signal obtained by the ASK demodulation module 226 is 189.66 mV, a minimum voltage value is -210.34 mV, and a voltage difference between the maximum voltage value and the minimum voltage value is 400 mV, to ensure ASK communication.

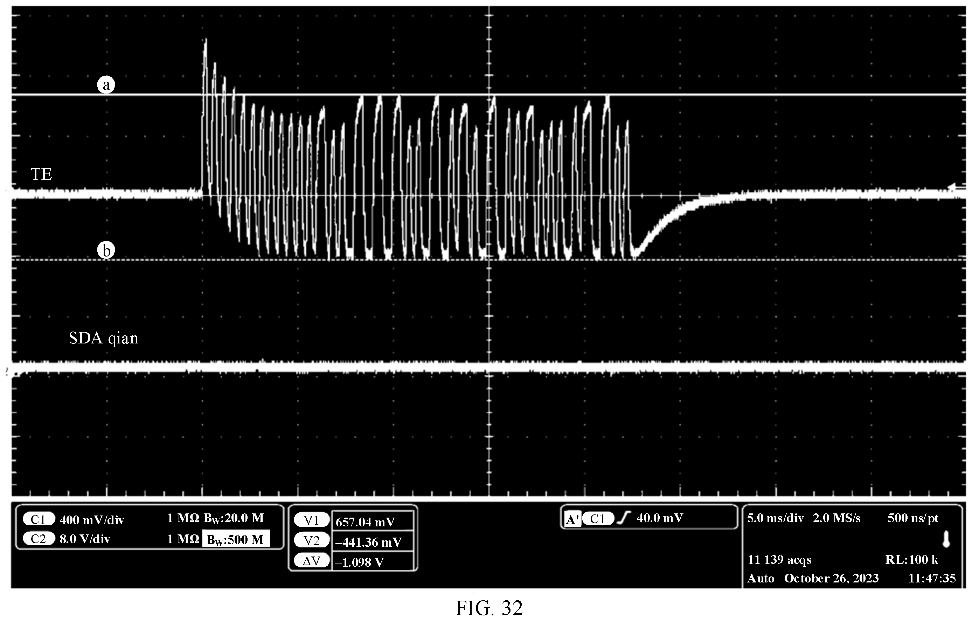

When the wireless charging system in this embodiment of this application performs ASK communication, a waveform of a demodulated signal obtained by the ASK demodulation module 226 is shown in FIG. 32. As can be seen from FIG. 32, in this embodiment of this application, when ASK communication is performed, a maximum voltage value of the demodulated signal obtained by the ASK demodulation module 226 is 657.04 mV, a minimum voltage value is -441.36 mV, and a voltage difference between the maximum voltage value and the minimum voltage value is about 1098 mV, which is greater than 400 mV in the related technology. Therefore, ASK communication transmitted by the electronic device 40 can be correctly identified by the ASK demodulation module 226 in the wireless charging device 20.

The wireless power receiving circuit 30 provided in this embodiment of this application has at least the following advantageous effects: (1) In the wireless power receiving circuit 30, the communication capacitor connected in parallel to the rectifying module 320 is removed, so that a problem that large capacitor howling is generated the communication capacitor connected in parallel to the rectifying module 320 has a large plate vibration may be avoided. (2) The impedance adjustment module 330 may not include a communication capacitor, but is formed by using a communication resistor. In this case, since the communication capacitor is removed, the problem that the communication capacitor generates a plate vibration may be avoided. (3) The impedance adjustment module 330 may also include a communication capacitor. In this case, the communication capacitor and the second impedance compensation module 310 are connected in parallel. Since in a series loop formed by the receiving coil L2, the second impedance compensation module 310, and the rectifying module 320, a voltage of the second impedance compensation module 310 is much less than a voltage of the rectifying module 320, the communication capacitor is set to be connected in parallel to the second impedance compensation module 310. Compared with the related technology, this can greatly reduce a voltage across two ends of the communication capacitor, thereby attenuating plate vibration of the communication capacitor, alleviating the problem that large capacitor howling is generated when the electronic device 40 is wirelessly charged, and improving user experience. In addition, control logic of the processing module 340 for the switching unit 334 does not need to be changed, which makes the solution more feasible. (4) This solution can be obtained by changing a connection manner of the first electrode plate of the second communication capacitor Cb in the related technology, which facilitates implementation of the technical solution and helps reduce costs of the electronic device 40. (5) Since a voltage of the communication capacitor is reduced, a communication capacitor with a slightly lower withstand voltage can be used, and a selectable range of capacitance values and costs of the capacitor are both optimized. (6) Wireless charging efficiency can be improved.

The foregoing embodiments are merely intended for describing the technical solutions of this application, but not for limiting this application. Although this application is described in detail with reference to the foregoing embodiments, it is to be understood by a person of ordinary skill in the art that they may still make modifications to the technical solutions described in the foregoing embodiments or make equivalent replacements to some technical features thereof, without departing from the spirit and scope of the technical solutions of the embodiments of this application, which being included in the protection scope of this application.

## Claims

1. A wireless power receiving circuit, used in an electronic device, wherein the wireless power receiving circuit comprises: a receiving coil, an impedance compensation module, a rectifying module, an impedance adjustment module, and a processing module;
a first end of the receiving coil is connected to a first end of the impedance compensation module, a second end of the impedance compensation module is connected to a first input end of the rectifying module, a second end of the receiving coil is connected to a second input end of the rectifying module, and an output end of the rectifying module is configured to be connected to a load of the electronic device;
a first end of the impedance adjustment module is connected to the first end of the impedance compensation module, and a second end of the impedance adjustment module is connected to the second end of the impedance compensation module; and
the processing module is connected to a control end of the impedance adjustment module, the processing module is configured to control turn-on and turn-off of the impedance adjustment module, to cause a waveform of an electrical signal in the receiving coil to change, and a change in the waveform of the electrical signal in the receiving coil is used to transmit communication information.

2. The wireless power receiving circuit according to claim 1, wherein the impedance adjustment module comprises: a first impedance unit and a switching unit;
a first end of the first impedance unit is connected to the first end of the impedance compensation module, a second end of the first impedance unit is connected to a first end of the switching unit, and a second end of the switching unit is connected to the second end of the impedance compensation module; and
the processing module is connected to a control end of the switching unit, and the processing module is configured to control turn-on and turn-off of the switching unit, to control turn-on and turn-off of the impedance adjustment module.

3. The wireless power receiving circuit according to claim 2, wherein the impedance adjustment module further comprises: a second impedance unit; and
a first end of the second impedance unit is connected to the second end of the switching unit, and a second end of the second impedance unit is connected to the second end of the impedance compensation module.

4. The wireless power receiving circuit according to claim 3, wherein the first impedance unit comprises a first capacitor, and the second impedance unit comprises a second capacitor; and/or
the first impedance unit comprises a first resistor, and the second impedance unit comprises a second resistor.

5. The wireless power receiving circuit according to any one of claims 2 to 4, wherein the switching unit comprises: a first transistor and a second transistor;
a first electrode of the first transistor is connected to the second end of the first impedance unit, a second electrode of the first transistor is connected to a second electrode of the second transistor, and a first electrode of the second transistor is connected to the second end of the impedance compensation module; and
the processing module is connected to a control electrode of the first transistor, a control electrode of the second transistor, the second electrode of the first transistor, and the second electrode of the second transistor, to control turn-on and turn-off of the first transistor and the second transistor.

6. The wireless power receiving circuit according to claim 5, wherein the first transistor and the second transistor are both N-type transistors, the first electrode of the first transistor and the first electrode of the second transistor are both drains of the N-type transistors, and the second electrode of the first transistor and the second electrode of the second transistor are sources of the N-type transistors.

7. The wireless power receiving circuit according to any one of claims 1 to 6, wherein the processing module comprises: a control unit and a modulation unit; and
an output end of the control unit is connected to an input end of the modulation unit, and an output end of the modulation unit is connected to the control end of the impedance adjustment module; the control unit is configured to generate a control signal based on the communication information, and transmit the control signal to the modulation unit; and the modulation unit is configured to modulate the control signal to generate a modulation signal, and the modulation signal is used to control turn-on and turn-off of the impedance adjustment module.

8. The wireless power receiving circuit according to any one of claims 1 to 7, wherein the impedance compensation module comprises: a third capacitor; and
a first electrode plate of the third capacitor is connected to the first end of the receiving coil and the first end of the impedance adjustment module, and a second electrode plate of the third capacitor is connected to the first input end of the rectifying module and the second end of the impedance adjustment module.

9. The wireless power receiving circuit according to claim 8, wherein the impedance compensation module further comprises: a fourth capacitor and an inductor; and
the second electrode plate of the third capacitor is connected to a first electrode plate of the fourth capacitor and a first end of the inductor, a second end of the inductor is connected to the first input end of the rectifying module and the second end of the impedance adjustment module, and a second electrode plate of the fourth capacitor is connected to the second end of the receiving coil.

10. The wireless power receiving circuit according to any one of claims 1 to 9, wherein the rectifying module is a full-wave rectifying circuit or a half-wave rectifying circuit.

11. An electronic device, comprising a load and the wireless power receiving circuit according to any one of claims 1 to 10, wherein
an output end of the wireless power receiving circuit is connected to the load, and is configured to output an electrical signal to the load.

12. A wireless charging system, comprising a wireless charging device and the electronic device according to claim 11, wherein the wireless charging device is configured to wirelessly charge the electronic device.
